# EUROPÄISCHE PATENTANMELDUNG

(11) **EP 4 818 523 A1**
(43) Veröffentlichungstag der Anmeldung: **07.10.2026**
(21) Anmeldenummer: 26162489.4
(22) Anmeldetag: 05.03.2026
(51) Int. Cl.: F04D 3/00, A23B 2/46, B01F 25/60, F04C 11/00, F04D 13/12

(54) **FLUIDVERARBEITUNGSANLAGE, VERFAHREN ZUM BETREIBEN EINER FLUIDVERARBEITUNGSANLAGE**

(30) Priorität: 31.03.2025 DE 102025112405
(71) Anmelder: Recenso GmbH, 42897 Remscheid (DE)
(72) Erfinder: Grote, Ulrich, 59590 Geseke (DE); Olbert, Gerhard, 69221 Dossenheim (DE); Veith, Luzius, 88682 Salem (DE)
(74) Vertreter: DREISS Patentanwälte PartG mbB

(57) **Zusammenfassung**

Die Erfindung betrifft eine Fluidverarbeitungsanlage (10), die Fluidverarbeitungsanlage umfassend: Prozessbehälter (12), der einen fluidisch verbundenen Prozessraum (14) zur Aufnahme einer Prozessflüssigkeit (16) definiert; und eine Fördereinrichtung (32) zum Umwälzen der Prozessflüssigkeit (16), die Fördereinrichtung (32) umfassend: eine Gehäusekonstruktion (40), die eine Fluidpassage (42) mit einem Fluideinlass (44) und einem Fluidauslass (46) definiert;
eine Hauptförderkomponente (48), die dazu ausgebildet ist, die Prozessflüssigkeit (16) von dem Fluideinlass (44) zu dem Fluidauslass (46) durch die Fluidpassage (42) zu fördern; und
eine Drosselförderkomponente (58) zur Erhöhung des hydraulischen Widerstands in der Fluidpassage (42). Außerdem betrifft die Erfindung ein Verfahren zum Betreiben einer Fluidverarbeitungsanlage (10).

## Beschreibung

Die vorliegende Erfindung betrifft das Gebiet der Anlagentechnik. Insbesondere betrifft die vorliegende Erfindung eine Fluidverarbeitungsanlage mit einer Fördereinrichtung und ein Verfahren zum Betreiben einer solchen Fluidverarbeitungsanlage.

In diesen Fluidverarbeitungsanlagen werden Prozessflüssigkeiten in einem Prozessbehälter verarbeitet. Eine solche Verarbeitung kann je nach Fluidverarbeitungsanlage bspw. eine chemische Veränderung der Prozessflüssigkeit, eine Homogenisierung der Prozessflüssigkeit und/oder eine Sterilisation oder ähnliches der Prozessflüssigkeit umfassen. Um eine Durchmischung der Prozessflüssigkeit in dem Prozessbehälter zu gewährleisten, ist typischerweise wenigstens eine Fördereinrichtung vorhanden, durch welche die Prozessflüssigkeit umgewälzt wird.

Oftmals muss die Prozessflüssigkeit in der Fluidverarbeitungsanlage zusätzlich auf eine gewünschte Prozesstemperatur gebracht werden, damit die erforderlichen Prozesse ablaufen können. Eine solche Erwärmung der Prozessflüssigkeit kann bspw. durch eine separate Heizeinrichtung wie einen Durchlauferhitzer oder ähnliches realisiert werden. Um eine ausreichende Erwärmung der Prozessflüssigkeit zu realisieren, erzeugen solche separaten Heizeinrichtungen jedoch lokal Temperaturen, die deutlich oberhalb der Prozesstemperatur liegen. Dies kann zu einer Beschädigung von Komponenten der Fluidverarbeitungsanlage und/oder zu einer unerwünschten chemischen Veränderung wie bspw. Überhitzung, Verkokung oder ähnliches der Prozessflüssigkeit führen.

Es ist auch bekannt, die Prozessflüssigkeit dadurch zu erwärmen, dass eine Fördereinrichtung mit einer hohen dissipativen Verlustleistung eingesetzt wird. Im Betrieb der Fluidverarbeitungsanlage wird also die Prozessflüssigkeit durch die dissipative Verlustleistung der Fördereinrichtung selbst erwärmt. Eine derartige Erwärmung der Prozessflüssigkeit ist besonders schonend für die Komponenten der Fluidverarbeitungsanlage und die Prozessflüssigkeit. Die Offenlegungsschriften DE 10 2022 003 576 A1 und DE 10 2022 003 577 A1 offenbaren jeweils eine Recyclinganlage, bei der die Prozessflüssigkeit durch die Fördereinrichtung erwärmt wird.

Die Erfindung beschäftigt sich mit der Aufgabe, die Effektivität einer Fördereinrichtung im Hinblick auf die Erwärmung der geförderten Prozessflüssigkeit zu steigern.

Ein erster Aspekt der Offenbarung betrifft eine Fluidverarbeitungsanlage.

Die Fluidverarbeitungsanlage umfasst einen Prozessbehälter, der einen fluidisch verbundenen Prozessraum zur Aufnahme einer Prozessflüssigkeit definiert. Insbesondere ist der Prozessbehälter einteilig ausgebildet. Der Prozessbehälter kann aber auch mehrteilig ausgebildet, also aus mehreren Einzelteilen zusammengesetzt, sein. Der Prozessraum kann in mehrere miteinander fluidisch verbundene Prozessteilräume unterteilt sein. Ist der Prozessbehälter aus mehreren Einzelteilen zusammengesetzt, so kann bspw. jedes der Einzelteile einen jeweils anderen Prozessteilraum des Prozessraums definieren.

Die Fluidverarbeitungsanlage umfasst außerdem eine Fördereinrichtung zum Umwälzen der in dem Prozessraum befindlichen Prozessflüssigkeit. Durch die Fördereinrichtung kann also die in dem Prozessraum befindliche Prozessflüssigkeit in Bewegung gebracht bzw. in Bewegung gehalten werden.

Die Fördereinrichtung umfasst eine Gehäusekonstruktion, die eine Fluidpassage mit wenigstens einem Fluideinlass und wenigstens einem Fluidauslass definiert. Die Gehäusekonstruktion bezeichnet die Gesamtheit an Komponenten, die an der Definition der Fluidpassage beteiligt ist. Insbesondere ist die Gehäusekonstruktion einteilig ausgebildet, sodass die Gehäusekonstruktion durch ein einziges Gehäuseteil gebildet ist. Vorzugsweise ist die Gehäusekonstruktion jedoch mehrteilig ausgebildet. Bspw. ist die mehrteilige Gehäusekonstruktion durch mehrere aneinander befestigte Gehäuseteile gebildet. Die mehrteilige Gehäusekonstruktion kann auch ein oder mehrere Verbindungsstücke aufweisen, die zwischen zwei Gehäuseteilen angeordnet sind und die Gehäuseteile miteinander fluidisch verbinden. Solche Verbindungsstücke können steif oder verformbar, insbesondere als Schlauchstücke, ausgebildet sein.

Die Fördereinrichtung umfasst außerdem eine Hauptförderkomponente, die dazu ausgebildet ist, die Prozessflüssigkeit von dem Fluideinlass zu dem Fluidauslass durch die Fluidpassage zu fördern. Die Aufgabe der Hauptförderkomponente ist also die Förderung der Prozessflüssigkeit durch die Fluidpassage. Die Hauptförderkomponente umfasst hierzu wenigstens einen ersten Förderkörper, der in der Fluidpassage drehbar angeordnet ist.

Die Fördereinrichtung umfasst außerdem eine Drosselförderkomponente zur Erhöhung des hydraulischen Widerstands in der Fluidpassage. Die Aufgabe der Drosselförderkomponente besteht also darin, den hydraulischen Widerstand in der Fluidpassage zu erhöhen. Hierzu weist die Drosselförderkomponente sowohl eine Förderfunktion als auch eine drosselnde Wirkung auf. Die Drosselförderkomponente umfasst wenigstens einen zweiten Förderkörper, der zwischen dem ersten Förderkörper und dem Fluidauslass in der Fluidpassage drehbar angeordnet ist. Der zweite Förderkörper ist also dem ersten Förderkörper nachgeordnet, bezogen auf die Erstreckung der Fluidpassage von dem Fluideinlass zu dem Fluidauslass. Eine von dem Fluideinlass zu dem Fluidauslass durch die Fluidpassage strömende Prozessflüssigkeit strömt also zunächst entlang der Hauptförderkomponente und anschließend entlang der Drosselförderkomponente.

Die Erfinder haben erkannt, dass die eingangs genannte Aufgabe durch eine Fluidverarbeitungsanlage mit einer wie vorstehend beschrieben ausgebildeten Fördereinrichtung gelöst wird. Durch die Drosselförderkomponente und die damit einhergehende Erhöhung des hydraulischen Widerstands in der Fluidpassage kann eine besonders effektive Erwärmung einer geförderten Prozessflüssigkeit realisiert werden. Die Hauptförderkomponente baut vor der dahinter angeordneten Drosselförderkomponente einen hohen Druck auf. Hinter der Drosselförderkomponente fällt der Druck schlagartig ab, da sich die Prozessflüssigkeit beim Passieren der Drosselförderkomponente stark beschleunigt. Dabei entstehen Verwirbelungen und Reibungseffekte. Das hat zur Folge, dass die kinetische Energie der Prozessflüssigkeit in Wärme umgewandelt wird. Die Drosselförderkomponente kann dabei im Sinne einer dynamischen Blende wirken.

In einigen Ausführungsformen ist die Fluidverarbeitungsanlage eine Anlage zur Gewinnung von Sekundärressourcen aus polymerhaltigen Ausgangsmaterialien, also eine Recyclinganlage. Es sind aber auch davon abweichende Arten von Fluidverarbeitungsanlagen denkbar. Bspw. kann die Fluidverarbeitungsanlage auch eine Anlage zur Verarbeitung von pastösen oder flüssigen Lebensmitteln wie bspw. Milch sein.

In einigen Anwendungsfällen, insbesondere bei Recyclinganlagen, kann die Prozessflüssigkeit Katalysatorpartikel aufweisen, die in der Prozessflüssigkeit suspendiert sind. Solche Katalysatorpartikel können eine Größe von 5 µm bis 10 µm aufweisen. Die katalysierten Reaktionen finden an der Oberfläche bzw. in den Poren der Katalysatorpartikel statt. Grundsätzlich können diese aktiven Zentren der Katalysatorpartikel bspw. durch Ablagerungen inaktiviert werden. In diesen Anwendungsfällen kann sich aus der beanspruchten Ausbildung der Fördereinrichtung der zusätzliche Vorteil ergeben, dass die Katalysatorpartikel aufgrund der Verwirbelungen und Reibungseffekte kontinuierlich regeneriert werden. Die katalytische Aktivität der Katalysatorpartikel bleibt also länger erhalten.

In einigen Ausführungsformen umfasst die Fluidverarbeitungsanlage nur eine Fördereinrichtung. Es können aber auch mehr als nur eine Fördereinrichtung vorhanden sein, bspw. um die Heizleistung zu steigern.

In einigen Ausführungsformen umfasst die Hauptförderkomponente nur einen drehbar gelagerten ersten Förderkörper. Die Hauptförderkomponente kann aber auch mehrere separat ausgebildete erste Förderkörper aufweisen, die zur Ausbildung der Hauptförderkomponente zusammenwirken.

In einigen Ausführungsformen umfasst die Drosselförderkomponente nur einen drehbar gelagerten zweiten Förderkörper. Die Drosselförderkomponente kann aber auch mehrere separat ausgebildete zweite Förderkörper aufweisen, die zur Ausbildung der Drosselförderkomponente zusammenwirken.

Es können verschiedene Arten von Förderkomponenten bzw. Förderkörpern eingesetzt werden. Dies wird später im Zusammenhang mit konkreteren Ausführungsformen noch näher erläutert. Insbesondere sind die Hauptförderkomponente und die Drosselförderkomponente Förderkomponenten desselben Typs. Die Hauptförderkomponente kann aber auch eine Förderkomponente eines anderen Typs sein als die Drosselförderkomponente.

In einigen bevorzugten Ausführungsformen ist vorgesehen, dass die Förderkomponenten, also die Hauptförderkomponente und die Drosselförderkomponente, dazu ausgebildet sind, die Prozessflüssigkeit in dieselbe Förderrichtung durch die Fluidpassage zu fördern. Die Förderkomponenten fördern die Prozessflüssigkeit also in dieselbe Richtung. Die Drosselförderkomponente wirkt dabei als eine Art dynamische Blende, die den durch die Hauptförderkomponente geförderten Prozessflüssigkeitsstrom abbremst.

In einigen anderen Ausführungsformen ist vorzugsweise vorgesehen, dass die Förderkomponenten dazu ausgebildet sind, die Prozessflüssigkeit in entgegengesetzte Förderrichtungen durch die Fluidpassage zu fördern. Die Förderkomponenten wirken also quasi gegeneinander. Dadurch kann eine besonders effektive aber auch schonende Erwärmung der Prozessflüssigkeit erreicht werden.

In einigen bevorzugten Ausführungsformen ist vorgesehen, dass die Hauptförderkomponente in einem ersten Gehäuseabschnitt der Gehäusekonstruktion angeordnet ist, und/oder dass die Drosselförderkomponente in einem zweiten Gehäuseabschnitt der Gehäusekonstruktion angeordnet ist. Die Gehäuseabschnitte können durch ein jeweils anderes Gehäuseteil der Gehäusekonstruktion gebildet sein. Alternativ können die Gehäuseabschnitte aber auch durch ein gemeinsames Gehäuseteil der Gehäusekonstruktion gebildet sein.

In einigen bevorzugten Ausführungsformen ist vorgesehen, dass die Hauptförderkomponente eine größere konstruktive Förderkapazität aufweist als die Drosselförderkomponente. Im Betrieb der Fördereinrichtung führt das dazu, dass sich zwischen der Hauptförderkomponente und der Drosselförderkomponente ein hoher Flüssigkeitsdruck aufbaut. Die Hauptförderkomponente fördert die Prozessflüssigkeit quasi gegen die Drosselförderkomponente, die aufgrund ihrer geringeren konstruktiven Förderkapazität die Prozessflüssigkeit nicht mit derselben Förderrate weiterfördern kann. Der hohe Flüssigkeitsdruck zwischen Hauptförderkomponente und Drosselförderkomponente geht mit einem hohen Druckabfall über die Drosselförderkomponente und einer effektiven Erwärmung der Prozessflüssigkeit einher. Die Förderkomponenten können dabei derart ausgebildet sein, dass sie die Prozessflüssigkeit in dieselbe Richtung fördern. Alternativ können die Förderkomponenten auch derart ausgebildet sein, dass sie die Prozessflüssigkeit in entgegengesetzte Richtungen fördern. In diesen Ausführungsformen kann die Hauptförderkomponente die Prozessflüssigkeit entgegen der Förderrichtung der Drosselförderkomponente durch die Drosselförderkomponente hindurchfördern.

In einigen bevorzugten Ausführungsformen ist vorgesehen, dass das Verhältnis des freien inneren Volumens des ersten Gehäuseabschnitts zu dem freien inneren Volumen des zweiten Gehäuseabschnitts zwischen 1,1 : 1 und 20 : 1 beträgt. Durch eine solche Bemessung der Gehäuseabschnitte kann ein gewünschter Unterschied im Hinblick auf die konstruktive Förderkapazität leicht umgesetzt werden. Das freie innere Volumen des ersten Gehäuseabschnitts bezeichnet dabei das innere Volumen des ersten Gehäuseabschnitts abzüglich das Volumens der in dem ersten Gehäuseabschnitt drehbar angeordneten Teile (erste(r) Förderkörper, Antriebswelle, etc.). Entsprechendes gilt für das freie innere Volumen des zweiten Gehäuseabschnitts. Vorzugsweise beträgt das Verhältnis zwischen 1,25 : 1 und 5 : 1, besonders bevorzugt zwischen 2 : 1 und 3 : 1.

In einigen bevorzugten Ausführungsformen ist vorgesehen, dass die Hauptförderkomponente derart ausgebildet ist, dass sie bei einer ersten Drehzahl einen ersten Eigenvolumenstrom fördert, dass die Drosselförderkomponente derart ausgebildet ist, dass sie bei der ersten Drehzahl einen zweiten Eigenvolumenstrom fördert, und dass das Verhältnis des ersten Eigenvolumenstroms zu dem zweiten Eigenvolumenstrom zwischen 30 : 1 und 1,5 : 1 beträgt. Durch einen solchen Unterschied in der konstruktiven Förderkapazität der Förderkomponenten kann eine effektive Erwärmung der Prozessflüssigkeit erreicht werden. Der erste Eigenvolumenstrom bezeichnet dabei den Volumenstrom, den die Hauptförderkomponente für sich genommen bei der ersten Drehzahl fördern würde, also ohne Wechselwirkung mit der Drosselförderkomponente. Der zweite Eigenvolumenstrom bezeichnet dabei den Volumenstrom, den die Drosselförderkomponente für sich genommen bei der ersten Drehzahl fördern würde, also ohne Wechselwirkung mit der Hauptförderkomponente. Vorzugsweise beträgt das Verhältnis zwischen 10 : 1 und 1,5 : 1.

In einigen bevorzugten Ausführungsformen ist vorgesehen, dass zwischen der Drosselförderkomponente und der Gehäusewandung des zweiten Gehäuseabschnitts, insbesondere zwischen dem Außenumfang des zweiten Förderkörpers und der Gehäusewandung des zweiten Gehäuseabschnitts, ein Spalt gebildet ist, durch den die Prozessflüssigkeit an der Drosselförderkomponente vorbeiströmen kann. In diesen Ausführungsformen können die Hauptförderkomponente und die Drosselförderkomponente auch die gleiche konstruktive Förderkapazität aufweisen und dazu ausgebildet sein, die Prozessflüssigkeit in entgegengesetzte Förderrichtungen durch die Fluidpassage zu fördern. Die Förderkomponenten fördern also beide die Prozessflüssigkeit in einen Zwischenraum zwischen den Förderkomponenten. Durch den Spalt kann die Prozessflüssigkeit aber in Richtung des Fluidauslasses an der Drosselförderkomponente vorbeiströmen, sodass letztlich die Prozessflüssigkeit von dem Fluideinlass zu dem Fluidauslass strömt. Der Spalt wirkt also als eine Art Bypass. Es kann auch zwischen der Hauptförderkomponente und der Gehäusewandung des ersten Gehäuseabschnitts zusätzlich ein Spalt vorhanden sein, wobei dieser Spalt aber kleiner dimensioniert ist als der Spalt zwischen der Drosselförderkomponente und der Gehäusewandung des zweiten Gehäuseabschnitts.

In einigen bevorzugten Ausführungsformen ist vorgesehen, dass das Verhältnis des Einlassquerschnitts der Hauptförderkomponente zum Auslassquerschnitt der Hauptförderkomponente zwischen 10 : 1 und 1 : 10 beträgt. Der Einlassquerschnitts der Hauptförderkomponente ist der Querschnitt der Eintrittsöffnung oder Eintrittsöffnungen, durch welche die Prozessflüssigkeit in den ersten Gehäuseabschnitt einströmt. Der Auslassquerschnitt der Hauptförderkomponente ist der Querschnitt der Austrittsöffnung oder Austrittsöffnungen, durch welche die Prozessflüssigkeit aus dem ersten Gehäuseabschnitt ausströmt. Das vorstehende Verhältnis hat sich im Hinblick auf eine effektive Erwärmung der Prozessflüssigkeit als besonders geeignet erwiesen. Vorzugsweise beträgt das Verhältnis zwischen 2 : 1 und 1 : 2, besonders bevorzugt zwischen 1,2 : 1,0 und 1,0 : 1,2. Die Hauptförderkomponente ist also im Hinblick auf den Querschnitt etwa strömungsneutral.

In einigen bevorzugten Ausführungsformen ist vorgesehen, dass das Verhältnis des Einlassquerschnitts der Drosselförderkomponente zum Auslassquerschnitt der Drosselförderkomponente zwischen 10 : 1 und 1 : 1 beträgt. Der Einlassquerschnitt der Drosselförderkomponente ist der Querschnitt der Eintrittsöffnung oder Eintrittsöffnungen, durch welche die Prozessflüssigkeit in den zweiten Gehäuseabschnitt einströmt. Der Auslassquerschnitt der Drosselförderkomponente ist der Querschnitt der Austrittsöffnung oder Austrittsöffnungen, durch welche die Prozessflüssigkeit aus dem zweiten Gehäuseabschnitt ausströmt. Das vorstehende Verhältnis hat sich im Hinblick auf eine effektive Erwärmung der Prozessflüssigkeit als besonders geeignet erwiesen. Vorzugsweise beträgt das Verhältnis zwischen 6 : 1 und 2 : 2, besonders bevorzugt zwischen 5 : 1 und 2,5 : 1,0. Die Drosselförderkomponente weist also vorzugsweise eine strömungsverengende Geometrie auf.

In einigen bevorzugten Ausführungsformen ist vorgesehen, dass wenigstens ein erster Förderkörper mit wenigstens einem zweiten Förderkörper drehfest verbunden ist. Wird also bspw. der erste Förderkörper gedreht, so wird der zweite Förderkörper mit dem ersten Förderkörper zwangsweise mitgedreht. Vorzugsweise sind die Förderkörper auf derselben Antriebswelle drehfest angeordnet. Die beiden Förderkörper können aber auch durch eine Getriebeeinrichtung miteinander drehfest verbunden sein. Die drehfeste Verbindung des ersten Förderkörpers mit dem zweiten Förderkörper hat den Vorteil, dass die Steuerung der Fördereinrichtung vereinfacht wird. Zudem können der erste Förderkörper und der zweite Förderkörper durch eine gemeinsame Antriebseinheit angetrieben bzw. gedreht werden. Dadurch können Kosten für eine separate weitere Antriebseinheit eingespart werden.

In einigen bevorzugten Ausführungsformen ist vorgesehen, dass wenigstens ein erster Förderkörper unabhängig von dem zweiten Förderkörper (wenn nur ein zweiter Förderkörper vorhanden ist) oder den zweiten Förderkörpern (wenn mehrere zweite Förderkörper vorhanden sind) drehbar ist. Eine solche Ausführung der Fördereinrichtung hat den Vorteil, dass die Wärmeerzeugung besonders präzise eingestellt, insbesondere geregelt, werden kann. Insbesondere können die beiden Förderkomponenten auch derart betrieben werden, dass keine oder nur eine geringe Wärmeentwicklung auftritt, gleichzeitig aber eine ausreichende Umwälzung der Prozessflüssigkeit stattfindet.

In einigen bevorzugten Ausführungsformen ist vorgesehen, dass wenigstens ein zweiter Förderkörper unabhängig von dem ersten Förderkörper (wenn nur ein erster Förderkörper vorhanden ist) oder den ersten Förderkörpern (wenn mehrere erste Förderkörper vorhanden sind) drehbar ist.

In einigen bevorzugten Ausführungsformen ist vorgesehen, dass die Fördereinrichtung eine Umgehungsleitung mit einer Durchflussregelarmatur aufweist, wobei die Umgehungsleitung dazu ausgebildet ist, wenigstens einen Teil der Prozessflüssigkeit an der Drosselförderkomponente vorbeizuleiten. Auch durch eine solche Umgehungsleitung mit einer Durchflussregelarmatur wird eine Möglichkeit geschaffen, die Heizwirkung der Fördereinrichtung einzustellen, insbesondere zu regeln. Ein Fluideinlass der Umgehungsleitung ist dabei vorzugsweise zwischen der Hauptförderkomponente und der Drosselförderkomponente mit der Fluidpassage fluidisch verbunden. Ein Fluidauslass der Umgehungsleitung kann zwischen der Drosselförderkomponente und dem Fluidauslass der Fluidpassage mit der Fluidpassage fluidisch verbunden sein. Alternativ kann der Fluidauslass der Umgehungsleitung aber auch direkt mit dem Prozessraum fluidisch verbunden sein.

In einigen bevorzugten Ausführungsformen ist vorgesehen, dass die Hauptförderkomponente als erste Turbinenpumpe ausgebildet ist und wenigstens ein erstes Laufrad aufweist. Die Hauptförderkomponente weist also als ersten Förderkörper wenigstens ein erstes Laufrad auf.

In einigen bevorzugten Ausführungsformen ist vorgesehen, dass die Drosselförderkomponente als zweite Turbinenpumpe ausgebildet ist und wenigstens ein zweites Laufrad aufweist. Die Drosselförderkomponente weist also als zweiten Förderkörper wenigstens ein zweites Laufrad auf.

Insbesondere sind beide Förderkomponenten jeweils als Turbinenpumpe ausgebildet. Es ist aber auch möglich, dass nur eine der Förderkomponenten als Turbinenpumpe ausgebildet ist. Die dann andere Förderkomponente ist folglich ein anderer Typ von Förderkomponente. Beispielsweise kann die Hauptförderkomponente oder die Drosselförderkomponente als Turbinenpumpe ausgebildet sein und die dann andere Förderkomponente als Schraubenspindelpumpe oder als Propellerpumpe.

Es gibt verschiedene Möglichkeiten, wie bei Turbinenpumpen erreicht werden kann, dass sich die Turbinenpumpen im Hinblick auf ihre konstruktive Förderkapazität unterscheiden. Bspw. unterscheidet sich das erste Laufrad im Hinblick auf die Schaufelzahl, den Anstellwinkel der Schaufeln, den Laufraddurchmesser und/oder die Laufradhöhe des zweiten Laufrads. Die beiden Turbinenpumpen können aber auch dieselbe Förderkapazität aufweisen, wie zuvor erläutert.

In einigen bevorzugten Ausführungsformen ist vorgesehen, dass die Hauptförderkomponente in dem ersten Gehäuseabschnitt exzentrisch angeordnet ist. Durch die exzentrische Anordnung wird zwischen dem Außenumfang der Hauptförderkomponente und der Gehäusewandung des ersten Gehäuseabschnitts ein Radialspalt gebildet. Insbesondere weist der erste Gehäuseabschnitt einen kreisförmigen Querschnitt auf. Die Hauptförderkomponente kann gleichfalls einen kreisförmigen Querschnitt aufweisen, wobei die Querschnittsfläche der Hauptförderkomponente kleiner ist als die Querschnittsfläche des ersten Gehäuseabschnitts. Der Radialspalt hat dann die Form eines exzentrischen Ringspalts. Im Betrieb der Fördereinrichtung kann sich die Prozessflüssigkeit in dem Radialspalt sammeln. **In** dem Radialspalt treten ausgeprägte Turbulenzen auf, was mit einer effektiven Erwärmung der Prozessflüssigkeit einhergeht. Je nach Fluidverarbeitungsanlage können in der Prozessflüssigkeit Katalysatorpartikel enthalten sein. In diesem Zusammenhang können sich die Katalysatorpartikel in dem Radialspalt ansammeln. Die ausgeprägten Turbulenzen in dem Radialspalt können dann dazu führen, dass die Katalysatorpartikel durch Reibung zerkleinert und dadurch im Betrieb regeneriert werden. Durch die exzentrische Anordnung kann folglich die Effektivität der Fluidverarbeitungsanlage gesteigert bzw. aufrechterhalten werden. In einigen bevorzugten Ausführungsformen ist vorgesehen, dass die Drosselförderkomponente in dem zweiten Gehäuseabschnitt exzentrisch angeordnet ist.

In einigen bevorzugten Ausführungsformen ist vorgesehen, dass die Druckseite der ersten Turbinenpumpe durch zwei Strömungspfade mit der Saugseite der zweiten Turbinenpumpe fluidisch verbunden ist. Die Prozessflüssigkeit kann also wahlweise durch einen ersten Strömungspfad von der Druckseite der ersten Turbinenpumpe zu der Saugseite der zweiten Turbinenpumpe gelangen oder durch einen zweiten Strömungspfad.

In einigen bevorzugten Ausführungsformen ist vorgesehen, dass die Druckseite der ersten Turbinenpumpe durch eine, bezogen auf die Drehachse des ersten Laufrads, axial zwischen dem ersten Laufrad und dem zweiten Laufrad angeordnete Zwischenkammer mit der Saugseite der zweiten Turbinenpumpe fluidisch verbunden ist. Durch eine solche Ausführung kann eine kompakte und mechanisch robuste Gehäusekonstruktion realisiert werden. Insbesondere verläuft einer der beiden Strömungspfade durch die Zwischenkammer. Die Zwischenkammer kann aber auch den einzigen Strömungspfad zwischen der Druckseite der ersten Turbinenpumpe und der Saugseite der zweiten Turbinenpumpe bilden.

In einigen bevorzugten Ausführungsformen ist vorgesehen, dass zwischen der Druckseite der ersten Turbinenpumpe und der Zwischenkammer ein erstes Trennelement mit einem oder mehreren ersten Fluiddurchlässen angeordnet ist. Das erste Trennelement kann bspw. als erste Trennwand ausgebildet sein. Die erste Trennwand ist vorzugsweise senkrecht zu der Drehachse des ersten Laufrads ausgerichtet. Vorzugsweise ist zwischen der Saugseite der zweiten Turbinenpumpe und der Zwischenkammer ein zweites Trennelement mit einem oder mehreren zweiten Fluiddurchlässen angeordnet. Das zweite Trennelement kann bspw. als zweite Trennwand ausgebildet sein. Die zweite Trennwand ist vorzugsweise senkrecht zu der Drehachse des zweiten Laufrads ausgerichtet. Bevorzugt ist vorgesehen, dass der erste Fluiddurchlass oder die ersten Fluiddurchlässe, bezogen auf die Drehachse des ersten Laufrands, in einem anderen Drehwinkelintervall angeordnet ist/sind als der zweite Fluiddurchlass oder die zweiten Fluiddurchlässe. Um von dem ersten Fluiddurchlass zu dem zweiten Fluiddurchlass zu gelangen, muss die Prozessflüssigkeit also schräg oder senkrecht zu der Drehachse des ersten Laufrads durch die Zwischenkammer strömen. Die Strömungsrichtung der Prozessflüssigkeit muss also gegenüber der Förderrichtung des ersten Laufrads in der Zwischenkammer umgelenkt werden. Dadurch werden gezielt Turbulenzen eingebracht, was mit einer starken Wärmeentwicklung einhergeht.

In einigen bevorzugten Ausführungsformen ist vorgesehen, dass die Druckseite der ersten Turbinenpumpe durch eine Bypassleitung mit der Saugseite der zweiten Turbinenpumpe fluidisch verbunden ist. Insbesondere verläuft einer der beiden Strömungspfade durch die Bypassleitung. Die Bypassleitung kann aber auch den einzigen Strömungspfad zwischen der Druckseite der ersten Turbinenpumpe und der Saugseite der zweiten Turbinenpumpe bilden.

Vorzugsweise verläuft der erste Strömungspfad durch die Zwischenkammer aber nicht durch die Bypassleitung und der zweite Strömungspfad durch die Bypassleitung aber nicht durch die Zwischenkammer.

In einigen bevorzugten Ausführungsformen ist vorgesehen, dass die Bypassleitung mit einer der Druckseite der ersten Turbinenpumpe nachgeschalteten Druckseitenkammer fluidisch verbunden ist. Zwischen der Druckseitenkammer und der Druckseite der ersten Turbinenpumpe kann ein Trennelement, insbesondere eine Trennwand, mit einem oder mehreren Fluiddurchlässen angeordnet sein.

In einigen bevorzugten Ausführungsformen ist vorgesehen, dass die Bypassleitung mit einer der Saugseite der zweiten Turbinenpumpe vorgeschalteten Saugseitenkammer fluidisch verbunden ist. Zwischen der Saugseitenkammer und der Saugseite der zweiten Turbinenpumpe kann ein Trennelement, insbesondere eine Trennwand, mit einem oder mehreren Fluiddurchlässen angeordnet sein.

In einigen bevorzugten Ausführungsformen ist vorgesehen, dass der Saugseite der ersten Turbinenpumpe eine Saugseitenkammer vorgeschaltet ist, wobei zwischen der Saugseitenkammer und der Saugseite der ersten Turbinenpumpe ein Trennelement mit wenigstens einem Fluiddurchlass angeordnet ist, und wobei der Fluiddurchlass in einem Bereich des Trennelements ausgebildet ist, der innerhalb des Außenradius der ersten Turbinenpumpe angeordnet ist. Die Prozessflüssigkeit tritt also im Wirkbereich der ersten Turbinenpumpe in den ersten Gehäuseabschnitt ein und nicht im Bereich des Radialspalts.

In einigen bevorzugten Ausführungsformen ist vorgesehen, dass die erste Förderkomponente als erste Schraubenspindelpumpe ausgebildet ist und wenigstens eine erste Schraubenspindel aufweist. Die erste Förderkomponente weist also als ersten Förderkörper wenigstens eine erste Schraubenspindel auf.

In einigen bevorzugten Ausführungsformen ist vorgesehen, dass die zweite Förderkomponente als zweite Schraubenspindelpumpe ausgebildet ist und wenigstens eine zweite Schraubenspindel aufweist. Die zweite Förderkomponente weist also als zweiten Förderkörper wenigstens eine zweite Schraubenspindel auf.

Insbesondere sind beide Förderkomponenten jeweils als Schraubenspindelpumpe ausgebildet. Es ist aber auch möglich, dass nur eine der Förderkomponenten als Schraubenspindelpumpe ausgebildet ist. Die dann andere Förderkomponente ist folglich ein anderer Typ von Förderkomponente. Beispielsweise kann die Hauptförderkomponente oder die Drosselförderkomponente als Schraubenspindelpumpe ausgebildet sein und die dann andere Förderkomponente als Turbinenpumpe oder als Propellerpumpe.

Es gibt verschiedene Möglichkeiten, wie bei Schraubenspindelpumpen erreicht werden kann, dass sich die Schraubenspindelpumpen im Hinblick auf ihre konstruktive Förderkapazität unterscheiden. Bspw. unterscheidet sich die erste Schraubenspindel im Hinblick auf den Durchmesser und/oder die Spindelsteigung von der zweiten Schraubenspindel. Die Schraubenspindelpumpen können aber auch die gleiche konstruktive Förderkapazität aufweisen, wie zuvor erläutert.

In einigen bevorzugten Ausführungsformen ist vorgesehen, dass die erste Schraubenspindel einen größeren Durchmesser aufweist als die zweite Schraubenspindel. Diese Ausbildung der Schraubenspindeln ist bevorzugt, um die Unterschiede im Hinblick auf die konstruktive Förderkapazität zu realisieren. Vorzugsweise weist der Gehäuseabschnitt, in dem die erste Schraubenspindelpumpe angeordnet ist, einen größeren Querschnitt auf als der Gehäuseabschnitt, in dem die zweite Schraubenspindelpumpe angeordnet ist.

In einigen bevorzugten Ausführungsformen ist vorgesehen, dass die erste Schraubenspindelpumpe zwei ineinandergreifende erste Schraubenspindeln aufweist. Ineinandergreifende Schraubenspindeln bilden geschlossene Förderkammern, wodurch die Prozessflüssigkeit effektiv gefördert werden kann. Folglich kann durch die erste Schraubenspindelpumpe ein hoher Förderdruck realisiert werden.

In einigen bevorzugten Ausführungsformen ist vorgesehen, dass die zweite Schraubenspindelpumpe zwei ineinandergreifende zweite Schraubenspindeln aufweist.

In einigen bevorzugten Ausführungsformen ist vorgesehen, dass die Hauptförderkomponente als erste Propellerpumpe ausgebildet ist und wenigstens einen ersten Propeller aufweist. Die Hauptförderkomponente weist also als ersten Förderkörper wenigstens einen ersten Propeller auf.

In einigen bevorzugten Ausführungsformen ist vorgesehen, dass die Drosselförderkomponente als zweite Propellerpumpe ausgebildet ist und wenigstens einen zweiten Propeller aufweist. Die Drosselförderkomponente weist also als zweiten Förderkörper wenigstens einen zweiten Propeller auf.

Insbesondere sind beide Förderkomponenten jeweils als Propellerpumpe ausgebildet. Es ist aber auch möglich, dass nur eine der Förderkomponenten als Propellerpumpe ausgebildet ist. Die dann andere Förderkomponente ist folglich ein anderer Typ von Förderkomponente. Beispielsweise kann die Hauptförderkomponente oder die Drosselförderkomponente als Propellerpumpe ausgebildet sein und die dann andere Förderkomponente als Schraubenspindelpumpe oder als Turbinenpumpe.

Es gibt verschiedene Möglichkeiten, wie bei Propellerpumpen erreicht werden kann, dass sich die Propellerpumpen im Hinblick auf ihre konstruktive Förderkapazität unterscheiden. Bspw. unterscheidet sich der erste Propeller im Hinblick auf den Propellerdurchmesser von dem zweiten Propeller. Die beiden Propellerpumpen können aber auch dieselbe Förderkapazität aufweisen, wie zuvor erläutert.

In einigen bevorzugten Ausführungsformen ist vorgesehen, dass die Fördereinrichtung wenigstens eine Antriebswelle aufweist, wobei wenigstens ein erster Förderkörper und/oder wenigstens ein zweiter Förderkörper mit der Antriebswelle drehfest verbunden ist. Insbesondere ist nur eine Antriebswelle vorhanden, mit der sämtliche Förderkörper drehfest verbunden sind. In diesen Ausführungsformen können als erster Förderkörper bspw. ein erstes Laufrad und als zweiter Förderkörper ein zweites Laufrad vorhanden sein. Insbesondere sind zwei Antriebswellen vorhanden, wobei wenigstens ein erster Förderkörper drehfest mit der ersten Antriebswelle verbunden ist und wenigstens ein anderer erster Förderkörper drehfest mit der zweiten Antriebswelle. In diesen Ausführungsformen können die Förderkomponenten bspw. jeweils als Schraubenspindelpumpe ausgebildet sein und jeweils zwei ineinandergreifende Schraubenspindeln aufweisen. Mit der ersten Antriebswelle sind dann eine erste Schraubenspindel und eine zweite Schraubenspindel drehfest verbunden. Mit der zweiten Antriebswelle sind dann die andere erste Schraubenspindel und die andere zweite Schraubenspindel drehfest verbunden. Sind mehrere Antriebswellen vorhanden, so können die Antriebswellen durch eine gemeinsame Antriebseinheit oder durch eine jeweils andere Antriebseinheit drehbar bzw. antreibbar sein.

In einigen bevorzugten Ausführungsformen ist vorgesehen, dass die Antriebswelle durch eine Durchgangsöffnung einer Gehäusewandung der Gehäusekonstruktion hindurchragt, wobei die Gehäusekonstruktion auf einer von der Fluidpassage abgewandten Seite der Gehäusewandung einen Dichtabschnitt aufweist, wobei zwischen dem Dichtabschnitt und der Antriebswelle eine Fluiddichtung angeordnet ist, und wobei der Dichtabschnitt zwischen der Durchgangsöffnung und der Fluiddichtung einen die Antriebswelle umgebenden Fluidraum definiert, dessen Querschnittsfläche größer ist als die Querschnittsfläche der Durchgangsöffnung. Die Prozessflüssigkeit enthält in vielen Anwendungen, beispielsweise bei der Sekundärressourcengewinnung aus polymerhaltigen Ausgangsmaterialien, typischerweise einen hohen Feststoffanteil. Die suspendierten Feststoffe können zu einer Beschädigung von Komponenten der Fluiddichtung führen. Von einer solchen Beschädigung können beispielsweise Wellrohre oder Faltenbalge betroffen sein, die zur Kompensation der thermischen Längenausdehnung eingesetzt werden. Durch die Anordnung der Fluiddichtung jenseits der Gehäusewandung und das Vorsehen des Fluidraums kann die Fluiddichtung vor Beschädigung durch Feststoffe geschützt werden. Zum einen müssen Feststoffe zunächst die Durchgangsöffnung passieren, um durch den Fluidraum zur Fluiddichtung zu gelangen. Darüber hinaus ist die Strömungsgeschwindigkeit in dem Fluidraum verringert, was auch die schädigende Wirkung der Feststoffe verringert. Der Dichtabschnitt ist Teil der Gehäusekonstruktion und insofern gehäusefest angeordnet. Der Dichtabschnitt kann ein separates Bauteil sein, das an der Gehäusewandung angeordnet, insbesondere befestigt, ist. Alternativ kann der Dichtabschnitt auch einstückig mit der Gehäusewandung ausgebildet sein. Die Fluiddichtung umschließt die Antriebswelle wirkt dichtend zwischen dem Dichtabschnitt und der Antriebswelle. Die Antriebswelle kann auf einer von der Gehäusewandung abgewandten Seite der Fluiddichtung durch ein Drehlager drehbar gelagert sein.

In einigen bevorzugten Ausführungsformen ist vorgesehen, dass der Dichtabschnitt einen Zuführdurchgang für eine Spülflüssigkeit aufweist, wobei der Zuführdurchgang zwischen der Fluiddichtung und der Durchgangsöffnung in den Fluidraum mündet. Durch das Einbringen einer Spülflüssigkeit kann verhindert werden, dass im Betrieb der Anlage überhaupt Feststoffe in den Fluidraum gelangen. Außerdem können im Fluidraum bereits vorhandene Feststoffe ausgespült werden. Im Hinblick auf die Verfahrensführung ist es möglich, dass im Betrieb der Anlage kontinuierlich Spülflüssigkeit durch den Zuführdurchgang in den Fluidraum eingebracht wird. Alternativ können auch zeitlich diskrete Spülvorgänge durchgeführt werden. Vorzugsweise wird als Spülflüssigkeit hochsiedendes Produktöl, eine aufbereitete, insbesondere gefilterte, Prozessflüssigkeit oder ein prozessverträgliches Öl verwendet.

In einigen bevorzugten Ausführungsformen ist vorgesehen, dass im Bereich der Durchgangsöffnung eine weitere Fluiddichtung angeordnet ist. Die weitere Fluiddichtung umschließt die Antriebswelle und wirkt dichtend zwischen der Gehäusewandung und der Antriebswelle. Durch die weitere Fluiddichtung wird eine zusätzliche Barriere für das Eintreten von Feststoffen in den Fluidraum geschaffen.

In einigen bevorzugten Ausführungsformen ist vorgesehen, dass ein unteres Längsende der Antriebswelle innerhalb der Gehäusekonstruktion angeordnet ist. Folglich ragt das untere Längsende nicht aus der Gehäusekonstruktion heraus. Das untere Längsende befindet sich innerhalb der Gehäusekonstruktion. Weil das untere Längsende nicht aus der Gehäusekonstruktion herausragt, ist im unteren Bereich der Gehäusekonstruktion auch keine Durchtrittsstelle vorhanden, an der die Fluidpassage gegenüber dem äußeren abgedichtet werden muss. Je nach Prozessflüssigkeit können verwendete Dichtungen einem hohen Verschleiß unterliegen, was mit gesteigerten Wartungskosten einhergeht. Dies wird dadurch vermieden, dass das untere Längsende innerhalb der Gehäusekonstruktion endet. Die Fördereinrichtung ist dabei vorzugsweise derart in der Fluidverarbeitungsanlage verbaut, dass die Drehachse der Antriebswelle vertikal ausgerichtet ist. Alternativ ist auch eine schräg ausgerichtete Drehachse möglich.

In einigen bevorzugten Ausführungsformen ist vorgesehen, dass das untere Längsende ungelagert in der Gehäusekonstruktion endet. Die Antriebswelle ist also als einseitig gelagerte Antriebswelle ausgeführt.

In einigen bevorzugten Ausführungsformen ist vorgesehen, dass die Antriebswelle einen oberen Endabschnitt aufweise, der aus der Gehäusekonstruktion herausragt und durch ein Drehlager drehbar gelagert ist. Der obere Endabschnitt ist dadurch leicht zugänglich, beispielsweise um den oberen Endabschnitt mit einer außerhalb der Gehäusekonstruktion angeordneten Antriebseinheit zu koppeln. Vorzugsweise ist der obere Endabschnitt durch ein, insbesondere außerhalb der Gehäusekonstruktion angeordnetes, Wälzkörperlager drehbar gelagert. Alternativ oder zusätzlich ist der obere Endabschnitt durch ein Gleitlager drehbar gelagert. Das Gleitlager kann im Bereich einer Durchgangsöffnung der Gehäusekonstruktion gebildet sein, durch die der obere Endabschnitt aus der Gehäusekonstruktion herausragt. Bevorzugt ist außerdem, dass der Fluideinlass der Fluidpassage oberhalb des Fluidauslasses der Fluidpassage angeordnet ist. Die Prozessflüssigkeit strömt also in der Fluidpassage von oben nach unten. Dadurch kann vermieden werden, dass die Prozessflüssigkeit im Betrieb in den Bereich der Durchgangsöffnung der Gehäusekonstruktion spritzt.

In einigen bevorzugten Ausführungsformen ist vorgesehen, dass ein Winkel zwischen der Drehachse der Antriebswelle und der Vertikalrichtung zwischen 0° und 45° beträgt. Die Drehachse der Antriebswelle verläuft also entweder in Vertikalrichtung (Winkel von 0°) oder schräg zur Vertikalrichtung, wobei der Winkel höchstens 45° beträgt. Dadurch kann sicher vermieden werden, dass die Prozessflüssigkeit im Betrieb in den Bereich der Durchgangsöffnung gelangt, durch die der obere Endabschnitt aus der Gehäusekonstruktion herausragt. Vorzugsweise beträgt der Winkel zwischen 0° und 15°.

In einigen anderen Ausführungsformen kann die Drehachse auch in Horizontalrichtung verlaufen.

In einigen bevorzugten Ausführungsformen ist vorgesehen, dass die Gehäusekonstruktion einen Überlaufschutz aufweist. Durch den Überlaufschutz kann verhindert werden, dass im Betrieb der Fördereinrichtung die Prozessflüssigkeit zu der Durchgangsöffnung gelangt, durch die die Antriebswelle aus der Gehäusekonstruktion herausragt. Vorzugsweise wird der Überlaufschutz durch eine Durchgangsöffnung in einer Seitenwandung der Gehäusekonstruktion gebildet. Die Durchgangsöffnung ist, bezogen auf die Drehachse des ersten Förderkörpers, axial zwischen dem ersten Förderkörper und der Durchgangsöffnung angeordnet, durch die die Antriebswelle aus der Gehäusekonstruktion herausragt.

In einigen bevorzugten Ausführungsformen ist vorgesehen, dass die Fördereinrichtung oder wenigstens eine der Fördereinrichtungen außerhalb des Prozessbehälters angeordnet ist, wobei ein Fluidaustritt des Prozessbehälters mit dem Fluideinlass der Fluidpassage fluidisch verbunden ist, und wobei ein Fluideintritt des Prozessbehälters mit dem Fluidauslass der Fluidpassage fluidisch verbunden ist. In diesen Ausführungsformen kann die Fördereinrichtung in einer Umwälzleitung angeordnet sein.

In einigen bevorzugten Ausführungsformen ist vorgesehen, dass die Fördereinrichtung oder wenigstens eine der Fördereinrichtungen wenigstens abschnittsweise in dem Prozessbehälter angeordnet ist. Insbesondere ist die Fördereinrichtung vollständig innerhalb des Prozessbehälters angeordnet. Alternativ dazu ist die Fördereinrichtung nur abschnittsweise in dem Prozessbehälter angeordnet. Bspw. ragt die Fördereinrichtung in den Prozessbehälter hinein.

In einigen bevorzugten Ausführungsformen ist vorgesehen, dass die Fluidverarbeitungsanlage zusätzlich zu der Fördereinrichtung wenigstens einen Umpumpmischer aufweist, der in den Prozessbehälter hineinragt. Der Umpumpmischer ist dazu ausgebildet, die Prozessflüssigkeit durch Umpumpen zu durchmischen. Durch den Umpumpmischer kann die Effektivität der Fluidverarbeitungsanlage gesteigert werden. Insbesondere wird vermieden, dass sich bestimmte Bestandteile der Prozessflüssigkeit, beispielsweise suspendierte Feststoffe, lokal anreichern. Darüber hinaus fördert die Umwälzung auch die Ausgasung von gasförmigen Produkten aus der Prozessflüssigkeit, wodurch die Kapazität der Fluidverarbeitungsanlage gesteigert wird. Dies gilt insbesondere dann, wenn die Fluidverarbeitungsanlage zur Sekundärressourcengewinnung aus polymerhaltigen Ausgangsmaterialien eingesetzt wird. Vorzugsweise ragt der Umpumpmischer durch eine Durchgangsöffnung in Mannlochgröße in den Prozessbehälter hinein. Die Durchgangsöffnung ist in einer Wandung des Prozessbehälters ausgebildet. Vorzugsweise weist der Umpumpmischer innerhalb des Prozessbehälters einen Rohrabschnitt auf, in dem ein Propeller auf einer Pumpenwelle drehbar gelagert ist. Der Propeller saugt die Prozessflüssigkeit an einem Ende in den Rohrabschnitt hinein und stößt sie am anderen Ende wieder aus dem Rohrabschnitt aus. Vorzugsweise ist der Umpumpmischer derart eingebaut, dass ein Winkel zwischen der Drehachse der Pumpenwelle und der Senkrechten zwischen 0° und 45° beträgt. Die Pumpenwelle kann in dem Prozessbehälter ungelagert enden. Alternativ dazu kann ein in dem Prozessbehälter angeordneter Endabschnitt der Pumpenwelle auch durch ein Drehlager drehbar gelagert sein. Es können auch mehrere Umpumpmischer vorhanden sein.

In einigen bevorzugten Ausführungsformen ist vorgesehen, dass der Umpumpmischer eine rotierende Schneideinheit aufweist. Vorzugsweise ist die Schneideinheit mit der Pumpenwelle drehfest verbunden. Eine solche Schneideinheit hat den Vorteil, dass suspendierte Feststoffe, insbesondere noch nicht aufgeschmolzenes polymerhaltiges Ausgangsmaterial, zerkleinert werden. Dadurch kann die Effektivität der Fluidverarbeitungsanlage weiter verbessert werden.

In einigen bevorzugten Ausführungsformen ist vorgesehen, dass die Fluidverarbeitungsanlage wenigstens ein stationäres Strömungsbrechelement aufweist, das im Bereich des Umpumpmischers an einer Innenseite des Prozessbehälters angeordnet ist. Durch das Strömungsbrechelement werden durch den Umpumpmischer erzeugte Fluidströme gebrochen, was zu einer zusätzlichen Durchmischung führt. Vorzugsweise ist das Strömungsblechelement ein Strömungsbrechstab, ein Strömungsbrechblech oder ein Strömungsbrechprofil. Besonders bevorzugt ist das Strömungsbrechelement ein dreieckiges Strömungsbrechprofil, das derart angeordnet ist, dass eine Spitze des dreieckigen Strömungsbrechprofils schräg oder vertikal nach oben orientiert ist. Durch eine solche Orientierung kann ein "Anbacken" von Feststoffen an dem Strömungsbrechprofil verhindert werden. Vorzugsweise sind mehrere Strömungsbrechelemente vorhanden, die in einer gemeinsamen Ebene angeordnet sind, die senkrecht zu der Drehachse der Pumpenwelle ausgerichtet ist.

In einigen bevorzugten Ausführungsformen ist vorgesehen, dass die Fluidverarbeitungsanlage eine Zuführeinrichtung zum Zuführen von polymerhaltigen Ausgangsmaterialien in den Prozessbehälter aufweist, wobei die Zuführeinrichtung eine Kompaktiereinheit mit zwei drehbar gelagerten Schnecken aufweist, die in Richtung eines Materialaustritts der Kompaktiereinheit konisch zulaufen. Eine solche Kompaktiereinheit ist dann besonders von Vorteil, wenn die Fluidverarbeitungsanlage zur Sekundärressourcengewinnung aus polymerhaltigen Ausgangsmaterialien verwendet wird. Die beiden Schnecken fördern das typischerweise fluffige polymerhaltige Ausgangsmaterial vom großen Einlassquerschnitt zum kleineren Austrittsquerschnitt. Auf dem Weg zum Materialauslass verdichtet sich das Ausgangsmaterial.

Vorzugsweise ist die Zuführeinrichtung derart verbaut, dass die Zuführeinrichtung auf Höhe des Umpumpmischers in den Prozessbehälter mündet, insbesondere auf Höhe der Schneideinheit des Umpumpmischers.

In einigen bevorzugten Ausführungsformen ist vorgesehen, dass die Zuführeinrichtung einen Extruder aufweist und der Materialaustritt der Kompaktiereinheit in den Extruder mündet. Das hat den Vorteil, dass das zugeführte Material in dem Extruder vorgewärmt werden kann. Dadurch wird das Aufschmelzen des Materials im Prozessbehälter erleichtert.

In einigen anderen, bevorzugten Ausführungsformen ist vorgesehen, dass der Materialaustritt der Kompaktiereinheit direkt in den Prozessbehälter mündet. Auf sonstige zwischen Kompaktiereinheit und Prozessbehälter geschaltete Komponenten wird folglich verzichtet.

Ein zweiter Aspekt der Beschreibung betrifft ein Verfahren zum Betreiben einer Fluidverarbeitungsanlage gemäß dem ersten Aspekt.

Das Verfahren umfasst das Anordnen einer Prozessflüssigkeit in dem Prozessbehälter.

Das Verfahren umfasst außerdem das Ansteuern der Fördereinrichtung derart, dass die Prozessflüssigkeit umgewälzt und durch dissipative Verlustleistung der Fördereinrichtung auf eine Betriebstemperatur aufgeheizt wird. Vorzugsweise beträgt die Betriebstemperatur wenigstens 200 °C, besonders bevorzugt zwischen 250 °C und 450 °C. Auf eine zusätzliche Heizeinrichtung wird vorzugsweise verzichtet.

Hinsichtlich der mit dem Verfahren erzielbaren Vorteile wird auf die diesbezüglichen Ausführungen zur Fluidverarbeitungsanlage verwiesen. Zur weiteren Ausgestaltung des Verfahrens können die im Zusammenhang mit der Fluidverarbeitungsanlage beschriebenen Merkmale dienen.

Je nach Fluidverarbeitungsanlage kann eine jeweils andere Prozessflüssigkeit in dem Prozessbehälter angeordnet werden. Insbesondere ist die Prozessflüssigkeit mehrphasig, bspw. 2-phasig, 3-phasig oder 4-phasig. Die Prozessflüssigkeit kann wenigstens eine polare Flüssigphase und wenigstens eine unpolare Flüssigphase aufweisen.

Die Prozessflüssigkeit kann auch Feststoffpartikel, insbesondere Katalysatorpartikel, Inertstoffpartikel, Biomassepartikel, Kunststoffpartikel und/oder Metallpartikel, aufweisen, die in der Prozessflüssigkeit suspendiert sind. Der Massenanteil an Feststoffpartikeln in der Prozessflüssigkeit kann zwischen 1 Gew.-% und 40 Gew.-% betragen, vorzugsweise zwischen 15 Gew.-% und 30 Gew.-%. Sind Katalysatorpartikel in der Prozessflüssigkeit enthalten, so können die Katalysatorpartikel durch die in der Fördereinrichtung erzeugten Verwirbelungen regeneriert werden.

Die Prozessflüssigkeit kann auch ein oder mehrere Gase aufweisen. Die Gase können in der Prozessflüssigkeit bedingt gelöst vorliegen. Solche Gase können bspw. Spaltprodukte eines polymerhaltigen Ausgangsmaterials sein. Der Massenanteil an Gas in der Prozessflüssigkeit kann zwischen 0,5 Gew-% und 10 Gew.-% betragen.

In einigen bevorzugten Ausführungsformen ist vorgesehen, dass eine Temperatur der aufgeheizten Prozessflüssigkeit ermittelt wird, und dass die Fördereinrichtung in Abhängigkeit von der ermittelten Temperatur derart angesteuert wird, dass die Prozessflüssigkeit bei der Betriebstemperatur gehalten wird. Insbesondere wird die Temperatur der Prozessflüssigkeit dadurch ermittelt, dass die Temperatur der Prozessflüssigkeit selbst gemessen wird. Es kann aber auch die Temperatur eines anderen Teils, bspw. eines Wandungsabschnitts des Prozessbehälters, gemessen und die Temperatur der Prozessflüssigkeit auf Grundlage der gemessenen Temperatur des anderen Teils berechnet oder geschätzt werden.

In einigen bevorzugten Ausführungsformen ist vorgesehen, dass die Prozessflüssigkeit ein prozessflüssigkeitsverträgliches Medium aufweist. Beispielsweise kann das prozessflüssigkeitsverträgliche Medium ein Anfahröl sein. Als Anfahröl kann bspw. ein Pyrolyseöl aus einer vorherigen Charge verwendet werden. Alternativ kann bspw. auch ein reraffiniertes Altöl als Anfahröl verwendet werden. In diesen Ausführungsformen kann die Fluidverarbeitungsanlage eine Fluidverarbeitungsanlage zur Sekundärressourcengewinnung aus polymerhaltigen Ausgangsmaterialien sein, also eine Recyclinganlage. Ein mögliches reraffiniertes Altöl ist das sogenannte Avista-Öl der Avista Oil AG. Avista-Öl wird dadurch gewonnen, dass zunächst Altöl in einer mehrstufigen Destillation einschließlich einer Dünnschichtverdampfung aufbereitet wird. Das Destillat wird danach durch Lösungsmittelextraktion von weiteren unerwünschten Bestandteilen befreit und gereinigt, um das Avista-Öl zu erhalten. Ist die das Anfahröl aufweisende Prozessflüssigkeit auf die Betriebstemperatur aufgeheizt, so kann der Prozessflüssigkeit, insbesondere sukzessive, das polymerhaltige Ausgangsmaterial zugegeben werden. Das polymerhaltige Ausgangsmaterial wird dabei vorzugsweise als Feststoff zugegeben und in der Prozessflüssigkeit geschmolzen. Hierzu kann die Fluidverarbeitungsanlage einen Förderer aufweisen, dessen Ausgang mit dem Prozessbehälter verbunden ist. Der Förderer kann als ein- oder mehrwelliger, vorzugsweise als einwelliger oder als zweiwelliger, Schneckenförderer ausgebildet sein. Es besteht jedoch auch die Möglichkeit, das polymerhaltige Ausgangsmaterial teilweise oder vollständig geschmolzen mittels eines Extruders in die Prozessflüssigkeit zu bringen. Insofern kann die Fluidverarbeitungsanlage auch einen Extruder aufweisen, dessen Ausgang mit dem Prozessbehälter verbunden ist. Der Extruder kann als ein- oder mehrwelliger, vorzugsweise als zweiwelliger, Schneckenextruder ausgebildet sein. Das polymerhaltige Ausgangsmaterial wird dann in der Fluidverarbeitungsanlage pyrolytisch gespalten. Wird die Fluidverarbeitungsanlage hingegen beispielsweise zur Erwärmung von Milch genutzt, so kann das prozessflüssigkeitsverträgliche Medium Wasser sein.

Ein dritter Aspekt der Offenbarung betrifft eine Fluidverarbeitungsanlage, insbesondere zur Gewinnung von Sekundärressourcen aus polymerhaltigen Ausgangsmaterialien. Die Fluidverarbeitungsanlage umfasst einen ein- oder mehrteiligen Prozessbehälter, der einen fluidisch verbundenen Prozessraum zur Aufnahme einer Prozessflüssigkeit definiert. Die Fluidverarbeitungsanlage umfasst außerdem wenigstens eine Fördereinrichtung zum Umwälzen der Prozessflüssigkeit. Die Fördereinrichtung umfasst eine Gehäusekonstruktion, die eine Fluidpassage mit wenigstens einem Fluideinlass und wenigstens einem Fluidauslass definiert. Die Fluidverarbeitungsanlage umfasst außerdem wenigstens einen Umpumpmischer, der in den Prozessbehälter hineinragt.

Es ergeben sich daraus die Vorteile, die den Umpumpmischer betreffen und im Zusammenhang mit dem ersten Aspekt erläutert wurden. Zur weiteren Ausgestaltung der Fluidverarbeitungsanlage des dritten Aspekts, insbesondere im Hinblick auf den Umpumpmischer, können die im Zusammenhang mit dem ersten Aspekt erläuterten Merkmale und die im Zusammenhang mit den Figuren erläuterten Merkmale dienen.

Die Fluidverarbeitungsanlage des dritten Aspekts kann eine Fördereinrichtung aufweisen, die wie im Zusammenhang mit dem ersten Aspekt beschrieben ausgebildet ist (Hauptförderkomponente, Drosselförderkomponente). Die Fördereinrichtung kann aber abweichend davon auch nur eine einzige Förderkomponente aufweisen oder mehrere gleich ausgebildete Förderkomponenten.

Ein vierter Aspekt der Offenbarung betrifft eine Fluidverarbeitungsanlage, insbesondere zur Gewinnung von Sekundärressourcen aus polymerhaltigen Ausgangsmaterialien. Die Fluidverarbeitungsanlage umfasst einen ein- oder mehrteiligen Prozessbehälter, der einen fluidisch verbundenen Prozessraum zur Aufnahme einer Prozessflüssigkeit definiert. Die Fluidverarbeitungsanlage umfasst außerdem wenigstens eine Fördereinrichtung zum Umwälzen der Prozessflüssigkeit. Die Fördereinrichtung umfasst eine Gehäusekonstruktion, die eine Fluidpassage mit wenigstens einem Fluideinlass und wenigstens einem Fluidauslass definiert. Die Fluidverarbeitungsanlage umfasst außerdem eine Zuführeinrichtung zum Zuführen von polymerhaltigen Ausgangsmaterialien in den Prozessbehälter. Die Zuführeinrichtung weist eine Kompaktiereinheit mit zwei drehbar gelagerten Schnecken auf, die in Richtung eines Materialaustritts der Kompaktiereinheit konisch zulaufen.

Es ergeben sich daraus die Vorteile, die die Kompaktiereinheit betreffen und im Zusammenhang mit dem ersten Aspekt erläutert wurden.

Zur weiteren Ausgestaltung der Fluidverarbeitungsanlage des vierten Aspekts, insbesondere im Hinblick auf die Zuführeinrichtung, können die im Zusammenhang mit dem ersten Aspekt erläuterten Merkmale und die im Zusammenhang mit den Figuren erläuterten Merkmale dienen.

Die Fluidverarbeitungsanlage des vierten Aspekts kann eine Fördereinrichtung aufweisen, die wie im Zusammenhang mit dem ersten Aspekt beschrieben ausgebildet ist (Hauptförderkomponente, Drosselförderkomponente). Die Fördereinrichtung kann aber abweichend davon auch nur eine einzige Förderkomponente aufweisen oder mehrere gleich ausgebildete Förderkomponenten.

Im Folgenden wird die Erfindung anhand der Zeichnungen näher erläutert. Dazu zeigen:
- Figur 1: eine schematische Darstellung einer Fluidverarbeitungsanlage mit einer Fördereinrichtung;
- Figur 2: eine Längsschnittdarstellung der Fördereinrichtung gemäß einem ersten Ausführungsbeispiel;
- Figur 3: eine Längsschnittdarstellung der Fördereinrichtung gemäß einem zweiten Ausführungsbeispiel;
- Figur 4: eine perspektivische Darstellung der Fördereinrichtung gemäß einem dritten Ausführungsbeispiel;
- Figur 5: eine Längsschnittdarstellung der Fördereinrichtung gemäß dem dritten Ausführungsbeispiel;
- Figur 6: eine Querschnittdarstellung der Fördereinrichtung gemäß dem dritten Ausführungsbeispiel;
- Figur 7: eine weitere Querschnittdarstellung der Fördereinrichtung gemäß dem dritten Ausführungsbeispiel;
- Figur 8: eine schematische Darstellung einer Fluidverarbeitungsanlage mit einer Fördereinrichtung gemäß einem vierten Ausführungsbeispiel;
- Figur 9: eine Detailansicht einer Fördereinrichtung im Bereich eines Durchtritts durch eine Gehäusekonstruktion der Fördereinrichtung;
- Figur 10: eine Detailansicht einer weiteren Fördereinrichtung im Bereich eines Durchtritts durch eine Gehäusekonstruktion der Fördereinrichtung;
- Figur 11: eine schematische Darstellung einer Fluidverarbeitungsanlage mit einem Umpumpmischer;
- Figur 12: eine Zuführeinrichtung mit einer Kompaktiereinheit; und
- Figur 13: eine weitere Zuführeinrichtung mit einer Kompaktiereinheit.

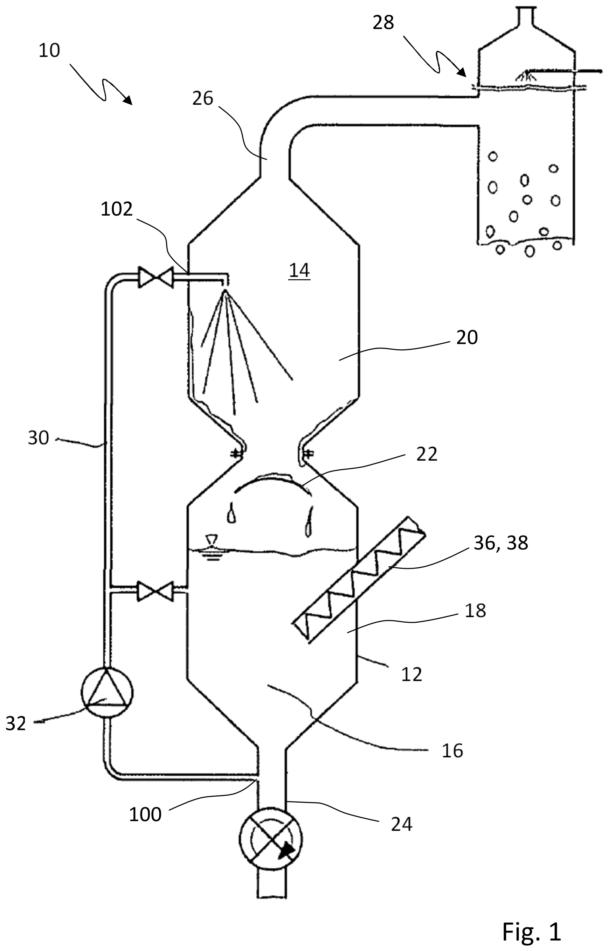

Figur 1 zeigt eine schematische Darstellung einer Fluidverarbeitungsanlage 10, die im Folgenden auch vereinfacht als Anlage 10 bezeichnet wird. Die Anlage 10 ist vorliegend zur Sekundärressourcengewinnung aus polymerhaltigen Ausgangsmaterialien ausgebildet, also als Recyclinganlage 10.

Die Anlage 10 umfasst einen Prozessbehälter 12, der einen fluidisch verbundenen Prozessraum 14 zur Aufnahme einer Prozessflüssigkeit 16 definiert. Vorliegend ist der Prozessraum 14 in einen unteren Prozessteilraum 18 und einen oberen Prozessteilraum 20 unterteilt. Zwischen dem oberen Prozessteilraum 20 und dem unteren Prozessteilraum 18 ist ein Prallblech 22 angeordnet. Der Flüssigkeitsspiegel der Prozessflüssigkeit 16 befindet sich in dem unteren Prozessteilraum 18.

Der Prozessbehälter 12 weist an seinem unteren Ende einen öffen- bzw. schließbaren ersten Auslass 24 auf, durch den die Prozessflüssigkeit 16 aus dem Prozessraum 14 abgelassen werden kann. Der Prozessbehälter 12 weist an seinem oberen Ende einen zweiten Auslass 26 auf, der zu einer Sprühkühleinrichtung 28 führt. Spaltprodukte der polymerhaltigen Ausgangsmaterialien können durch den Auslass 26 der Sprühkühleinrichtung 28 zugeführt werden.

Die Anlage 10 umfasst außerdem eine Umwälzleitung 30. Die Enden der Umwälzleitung 30 sind mit dem Prozessraum 14 fluidisch verbunden. Vorliegend ist ein erstes Ende der Umwälzleitung 30 mit dem unteren Prozessteilraum 18 fluidisch verbunden. Ein zweites Ende der Umwälzleitung 30 ist mit dem oberen Prozessteilraum 20 fluidisch verbunden, wobei dem zweiten Ende ein erstes Absperrventil vorgeschaltet ist. Die Umwälzleitung 30 weist außerdem ein drittes Ende auf, das auch mit dem unteren Prozessteilraum 18 fluidisch verbunden ist, vorliegend oberhalb des ersten Endes. Dem dritten Ende ist ein zweites Absperrventil vorgeschaltet.

In der Umwälzleitung 30 ist eine Fördereinrichtung 32 angeordnet, die in Figur 1 stark vereinfacht dargestellt ist. Die Fördereinrichtung 32 ist dazu ausgebildet, die Prozessflüssigkeit 16 aus dem unteren Prozessteilraum 18 durch die Umwälzleitung 30 und in den oberen Prozessteilraum 20 zu fördern. Die Prozessflüssigkeit 16 wird dadurch umgewälzt. Vorliegend wird das zweite Ende der Umwälzleitung 30 durch eine Düse gebildet. Ist das erste Absperrventil geöffnet, so kann durch die Düse die Prozessflüssigkeit 16 in den oberen Prozessteilraum 20 eingesprüht werden. Ist das zweite Absperrventil geöffnet, so kann die Prozessflüssigkeit 16 durch das dritte Ende in den unteren Prozessteilraum 18 gefördert werden, sodass die Prozessflüssigkeit 16 im unteren Prozessteilraum 18 umgefördert wird.

Die Anlage 10 umfasst außerdem eine Zuführeinrichtung 36 zum Zuführen von polymerhaltigen Ausgangsmaterialien zu dem Prozessraum 14. Vorliegend ist die Zuführeinrichtung 36 als einwelliger oder mehrwelliger Schneckenextruder 38, bevorzugt zweiwellig, oder als einwelliger oder mehrwelliger Schneckenförderer, bevorzugt einwellig oder zweiwellig, ausgebildet. Die Zuführeinrichtung 36 mündet in den unteren Prozessteilraum 18, vorliegend unterhalb des Flüssigkeitsspiegels der Prozessflüssigkeit 16. Die zugeführten Ausgangsmaterialien liegen dann als Teil der Prozessflüssigkeit 16 vor.

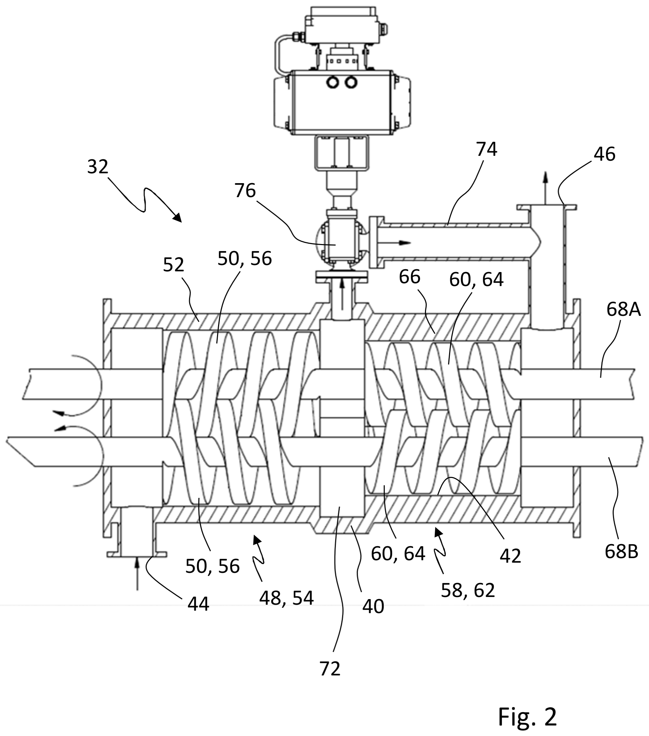

Um Sekundärressourcen aus den polymerhaltigen Ausgangsmaterialien zu gewinnen, müssen die Prozessflüssigkeit 16 bzw. die darin enthaltenen polymerhaltigen Ausgangsmaterialien in dem Prozessbehälter 12 auf eine Betriebstemperatur zwischen 250 °C und 450 °C aufgeheizt werden. Die Aufheizung erfolgt in den hierin beschriebenen Ausführungsbeispielen durch dissipative Verlustleistung der Fördereinrichtung 32. Die Fördereinrichtung 32 ist also ein Förder-Beheizungs-Aggregat. Vorteilhafte Ausführungen der Fördereinrichtung 32 werden im Folgenden im Zusammenhang mit den Figuren 2 bis 8 erläutert. Die Anlage 10 ist frei von einer dezidierten Heizeinrichtung. Je nach Betriebstemperatur der Prozessflüssigkeit 16 und Zusammensetzung der Ausgangsmaterialien können die Ausgangsmaterialien in der Prozessflüssigkeit 16 geschmolzen werden.

Im Folgenden wird mit Bezug auf Figur 2 ein erstes Ausführungsbeispiel der Fördereinrichtung 32 näher erläutert. Hierzu zeigt Figur 2 eine Längsschnittdarstellung der Fördereinrichtung 32.

Die Fördereinrichtung 32 umfasst eine Gehäusekonstruktion 40, die eine Fluidpassage 42 definiert. Die Fluidpassage 42 weist einen Fluideinlass 44 und einen Fluidauslass 46 auf. Der Fluideinlass 44 ist durch die Umwälzleitung 30 mit dem unteren Prozessteilraum 18 fluidisch verbunden. Der Fluidauslass 46 ist durch die Umwälzleitung 30 mit dem oberen Prozessteilraum 20 fluidisch verbunden.

Die Fördereinrichtung 32 umfasst eine Hauptförderkomponente 48, die dazu ausgebildet ist, die Prozessflüssigkeit 16 von dem Fluideinlass 44 zu dem Fluidauslass 46 durch die Fluidpassage 42 zu fördern. Die Hauptförderkomponente 48 weist wenigstens einen ersten Förderkörper 50 auf, der in der Fluidpassage 42 drehbar angeordnet ist. Die Hauptförderkomponente 48 ist in einem ersten Gehäuseabschnitt 52 der Gehäusekonstruktion 40 angeordnet.

In dem ersten Ausführungsbeispiel ist die Hauptförderkomponente 48 eine erste Schraubenspindelpumpe 54. Die erste Schraubenspindelpumpe 54 weist zwei ineinandergreifende erste Schraubenspindeln 56 als erste Förderkörper 50 auf.

Die Fördereinrichtung 32 umfasst außerdem eine Drosselförderkomponente 58 zur Erhöhung des hydraulischen Widerstands in der Fluidpassage 42. Die Drosselförderkomponente 58 umfasst wenigstens einen zweiten Förderkörper 60, der in der Fluidpassage 42 drehbar angeordnet ist.

In dem ersten Ausführungsbeispiel ist die Drosselförderkomponente 58 eine zweite Schraubenspindelpumpe 62. Die zweite Schraubenspindelpumpe 62 weist zwei ineinandergreifende zweite Schraubenspindeln 64 als zweite Förderkörper 60 auf. Die Drosselförderkomponente 58 ist in einem zweiten Gehäuseabschnitt 66 der Gehäusekonstruktion 40 angeordnet.

Bei dem ersten Ausführungsbeispiel sind die Förderkomponenten 48, 58 dazu ausgebildet, die Prozessflüssigkeit 16 in dieselbe Richtung durch die Fluidpassage 42 zu fördern. Auch die Drosselförderkomponente 58 ist also dazu ausgebildet, die Prozessflüssigkeit 16 von dem Fluideinlass 44 zu dem Fluidauslass 46 durch die Fluidpassage 42 zu fördern.

Die Hauptförderkomponente 48 weist eine größere konstruktive Förderkapazität auf als die Drosselförderkomponente 58. Wie in Figur 2 zu sehen ist, ist hierzu in dem ersten Ausführungsbeispiel der Durchmesser der ersten Schraubenspindeln 56 größer als der Durchmesser der zweiten Schraubenspindeln 64. Unterschiedliche konstruktive Förderkapazitäten können aber auch auf andere Art und Weise realisiert sein.

Die Abmessungen des ersten Gehäuseabschnitts 52 und des zweiten Gehäuseabschnitts 66 sind an die Abmessungen der Hauptförderkomponente 48 bzw. der Drosselförderkomponente 58 angepasst. Wie in Figur 2 zu sehen ist, weist der erste Gehäuseabschnitt 52 einen größeren Querschnitt auf als der zweite Gehäuseabschnitt 66.

Bei dem ersten Ausführungsbeispiel weist die Fördereinrichtung 32 eine erste Antriebswelle 68A und eine zweite Antriebswelle 68B auf. Auf der ersten Antriebswelle 68A sind eine erste Schraubenspindel 56 und eine zweite Schraubenspindel 64 drehfest angeordnet. Auf der zweiten Antriebswelle 68B sind die andere erste Schraubenspindel 56 und die andere zweite Schraubenspindel 64 drehfest angeordnet.

Die Antriebswellen 68A, 68B können durch eine gemeinsame Antriebseinheit, insbesondere einen Elektromotor, antreibbar sein. Die Antriebswellen 68A, 68B können aber auch durch eine jeweils andere Antriebseinheit antreibbar sein.

Der Fluideinlass 44 und der Fluidauslass 46 sind vorliegend derart ausgebildet, dass die Prozessflüssigkeit 16, bezogen auf die Drehachsen der Antriebswellen 68, radial oder tangential in die Gehäusekonstruktion 40 einströmt bzw. aus der Gehäusekonstruktion 40 ausströmt.

Die geringere konstruktive Förderkapazität der Drosselförderkomponente 58 hat im Betrieb der Fördereinrichtung 32 zur Folge, dass die Drosselförderkomponente 58 als eine Art dynamische Blende wirkt. Die Hauptförderkomponente 48 fördert einen großen Prozessflüssigkeitsstrom, der durch die Drosselförderkomponente 58 ausgebremst wird, sodass sich in dem Zwischenraum 72 zwischen der Hauptförderkomponente 48 und Drosselförderkomponente 58 ein hoher Flüssigkeitsdruck aufbaut. Der hohe Flüssigkeitsdruck zwischen Hauptförderkomponente 48 und Drosselförderkomponente 58 geht mit einem hohen Druckabfall über die Drosselförderkomponente 58 einher. Der hohe Druckabfall führt zu Verwirbelungen der Prozessflüssigkeit 16 und infolgedessen zu einer Erwärmung der Prozessflüssigkeit 16.

Bei dem ersten Ausführungsbeispiel weist die Fördereinrichtung 32 eine Umgehungsleitung 74 mit einer Durchflussregelarmatur 76 auf. Ein Fluideinlass der Umgehungsleitung 74 ist mit dem Zwischenraum 72 zwischen der Hauptförderkomponente 48 und der Drosselförderkomponente 58 fluidisch verbunden. Ein Fluidauslass der Umgehungsleitung 74 ist zwischen der Drosselförderkomponente 48 und dem Fluidauslass 46 der Fluidpassage 42 mit der Fluidpassage 42 fluidisch verbunden. Durch die Umgehungsleitung 74 kann die Prozessflüssigkeit 16 an der Drosselförderkomponente 48 vorbei geleitet werden. Dies ermöglicht es, die Heizleistung der Fördereinrichtung 32 unabhängig von der Gesamtförderrate der Fördereinrichtung 32 zu beeinflussen.

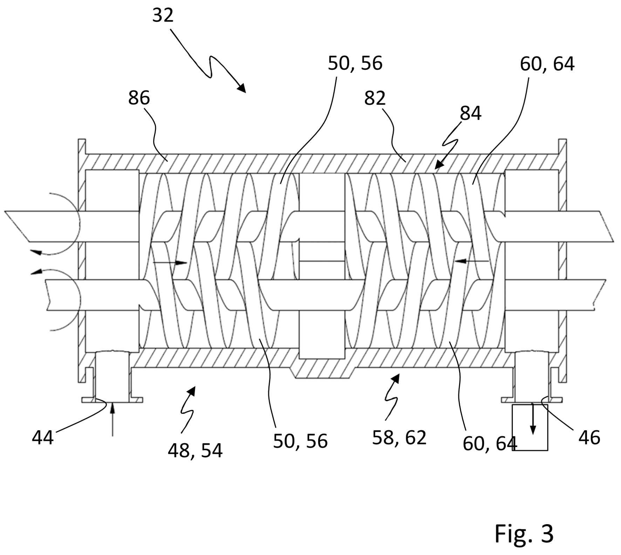

Im Folgenden wird mit Bezug auf Figur 3 ein zweites Ausführungsbeispiel der Fördereinrichtung 32 näher erläutert. Hierzu zeigt Figur 3 eine Längsschnittdarstellung der Fördereinrichtung 32.

Bei dem zweiten Ausführungsbeispiel sind die konstruktiven Förderkapazitäten der Förderkomponenten 48, 58 gleich.

Bei dem zweiten Ausführungsbeispiel sind zudem die Hauptförderkomponente 48 und die Drosselförderkomponente 58 derart ausgebildet, dass sie die Prozessflüssigkeit 16 in entgegengesetzte Richtungen durch die Fluidpassage 42 fördern. Die Hauptförderkomponente 48 ist dazu ausgebildet, die Prozessflüssigkeit 16 von dem Fluideinlass 44 zu dem Fluidauslass 46 durch die Fluidpassage 42 zu fördern. Die Drosselförderkomponente 58 ist hingegen dazu ausgebildet, die Prozessflüssigkeit 16 von dem Fluidauslass 46 zu dem Fluideinlass 44 durch die Fluidpassage 42 zu fördern. Die Förderkomponenten 48, 58 wirken also gegeneinander.

Um dennoch eine Förderung von Prozessflüssigkeit 16 von dem Fluideinlass 44 zu dem Fluidauslass 46 zu gewährleisten, ist zwischen dem Außenumfang der Drosselförderkomponente 58 und der Gehäusewandung 82 des zweiten Gehäuseabschnitts 66 ein Spalt 84 gebildet, durch den die Prozessflüssigkeit 16 an der Drosselförderkomponente 58 vorbeiströmen kann. Der Spalt 84 kann umlaufend sein. Der Spalt 84 ist derart klein dimensioniert, dass er in Figur 3 nicht erkennbar ist. Zwischen dem Außenumfang der Hauptförderkomponente 48 und der Gehäusewandung 86 des ersten Gehäuseabschnitts 52 ist hingegen kein solcher Spalt oder allenfalls ein kleiner dimensionierter Spalt vorhanden.

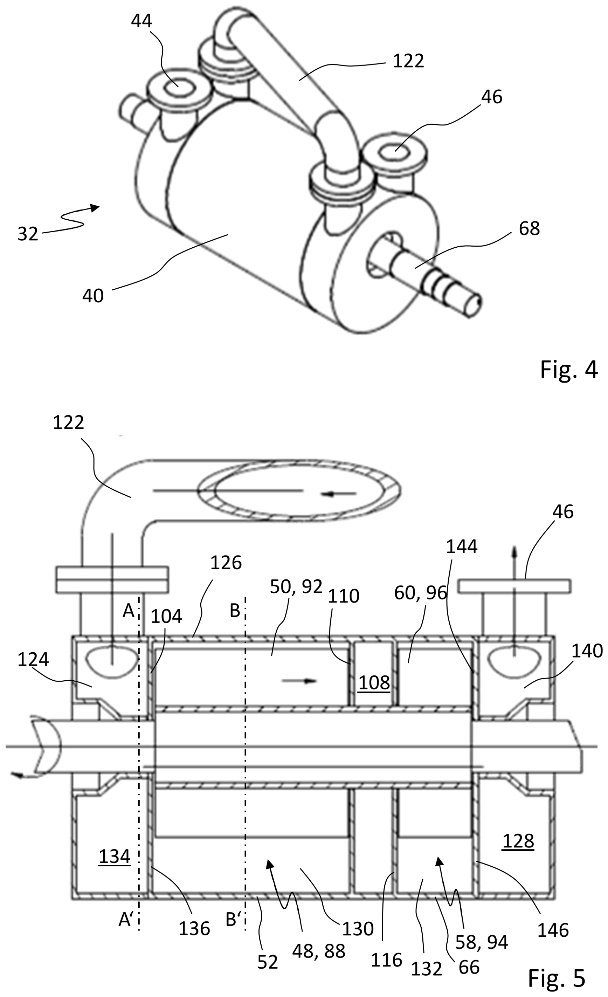

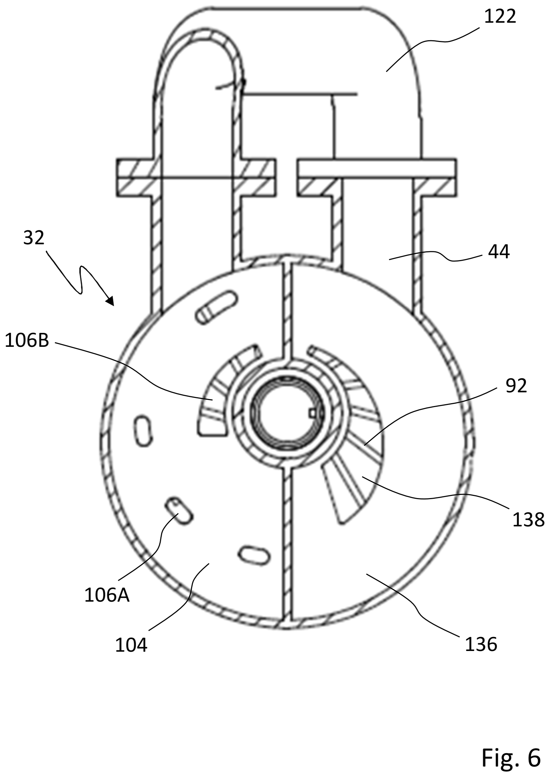

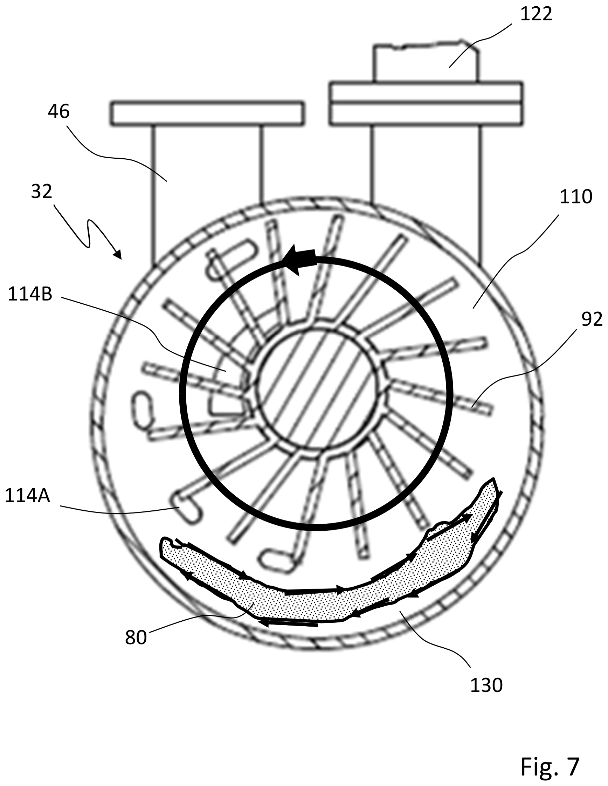

Im Folgenden wird mit Bezug auf die Figuren 4 bis 7 ein drittes Ausführungsbeispiel der Fördereinrichtung 32 näher erläutert. Hierzu zeigt Figur 4 eine perspektivische Darstellung der Fördereinrichtung 32. Figur 5 zeigt eine Längsschnittdarstellung der Fördereinrichtung 32. Die Figuren 6 und 7 zeigen jeweils eine Querschnittdarstellung der Fördereinrichtung 32. Dabei verläuft die Schnittebene der in Figur 6 gezeigten Querschnittdarstellung entlang der in Figur 5 gezeigten Schnittebene A-A'. Bei der in Figur 6 gezeigten Querschnittdarstellung verläuft die Schnittebene hingegen entlang der in Figur 5 gezeigten Schnittebene B-B'.

Bei dem dritten Ausführungsbeispiel ist die Hauptförderkomponente 48 eine erste Turbinenpumpe 88. Die erste Turbinenpumpe 88 weist als ersten Förderkörper 50 ein erstes Laufrad 92 auf. Das erste Laufrad 92 ist in einem zylindrischen ersten Gehäuseabschnitt 52 der Gehäusekonstruktion 40 drehbar angeordnet.

Die Drosselförderkomponente 58 ist bei dem dritten Ausführungsbeispiel als zweite Turbinenpumpe 94 ausgebildet. Die zweite Turbinenpumpe 94 weist als zweiten Förderkörper 60 ein zweites Laufrad 96 auf. Das zweite Laufrad 96 ist in einem zylindrischen zweiten Gehäuseabschnitt 66 der Gehäusekonstruktion 40 drehbar angeordnet.

Die Laufräder 92, 96 sind auf einer gemeinsamen Antriebswelle 68 drehfest angeordnet. Die Antriebswelle 68 ist in diesem Beispiel als Hohlwelle ausgebildet.

Der Fluideinlass 44 und der Fluidauslass 46 sind vorliegend derart ausgebildet, dass die Prozessflüssigkeit 16, bezogen auf die Drehachse der Antriebswelle 68, tangential in die Gehäusekonstruktion 40 einströmt bzw. aus der Gehäusekonstruktion 40 ausströmt.

Bei dem dritten Ausführungsbeispiel sind die Förderkomponenten 48, 58 derart ausgebildet, dass die konstruktive Förderkapazität der Hauptförderkomponente 48 größer ist als die konstruktive Förderkapazität der Drosselförderkomponente 58. Dies wird vorliegend dadurch erreicht, dass das erste Laufrad 92 eine größere Höhe, also Axialerstreckung, aufweist als das zweite Laufrad 96. Unterschiedliche konstruktive Förderkapazitäten können aber auch auf andere Art und Weise realisiert sein.

Die Druckseite der Hauptförderkomponente 48 ist bei dem dritten Ausführungsbeispiel durch zwei Strömungspfade mit der Saugseite der Drosselförderkomponente 58 fluidisch verbunden. Diese Strömungspfade werden im Folgenden näher erläutert.

Der erste Strömungspfad verläuft durch eine Zwischenkammer 108, die, bezogen auf die Drehachse der Antriebswelle 68, axial zwischen dem ersten Laufrad 92 und dem zweiten Laufrad 96 angeordnet ist.

Zwischen der Zwischenkammer 108 und der Druckseite der Hauptförderkomponente 48 bzw. dem ersten Gehäuseabschnitt 52 ist ein Trennelement 110 angeordnet, das im Folgenden auch als erstes Trennelement 110 bezeichnet wird (s. Figur 7). Vorliegend ist das erste Trennelement 110 eine erste Trennwand. In dem ersten Trennelement 110 sind mehrere erste Fluiddurchlässe 114 ausgebildet, durch welche die Druckseite der Hauptförderkomponente 48 bzw. der erste Gehäuseabschnitt 52 mit der Zwischenkammer 108 fluidisch verbunden ist.

Vorliegend sind mehrere radial äußere erste Fluiddurchlässe 114A vorhanden. Die ersten Fluiddurchlässe 114A sind in Drehrichtung der Antriebswelle 68 hintereinander angeordnet, vorliegend radial auf derselben Höhe.

Vorliegend ist zudem ein radial innerer erster Fluiddurchlass 114B vorhanden. Der erste Fluiddurchlass 114B ist näher an der Drehachse der Antriebswelle 68 angeordnet als die ersten Fluiddurchlässe 114A.

Zwischen der Zwischenkammer 108 und der Saugseite der Drosselförderkomponente 58 bzw. dem zweiten Gehäuseabschnitt 66 ist ein Trennelement 116 angeordnet, das im Folgenden auch als zweites Trennelement 116 bezeichnet wird. Vorliegend ist das zweite Trennelement 116 eine zweite Trennwand 118. In dem zweiten Trennelement 116 ist wenigstens ein zweiter Fluiddurchlass ausgebildet, durch den die Zwischenkammer 108 mit der Saugseite der Drosselförderkomponente 58 bzw. dem zweiten Gehäuseabschnitt 66 fluidisch verbunden ist, vorzugsweise mehrere zweite Fluiddurchlässe. Der zweite Fluiddurchlass ist in den Figuren nicht zu sehen.

Wie in Figur 7 zu sehen ist, sind die ersten Fluiddurchlässe 114, bezogen auf die Drehachse der Antriebswelle 68, in einem ersten Drehwinkelintervall ausgebildet. Das erste Drehwinkelintervall erstreckt sich vorliegend über einen Drehwinkel von etwa 160°. Der zweite Fluiddurchlass bzw. die zweiten Fluiddurchlässe ist/sind vorzugsweise in einem zweiten Drehwinkelintervall ausgebildet, das zu dem ersten Drehwinkelintervall verdreht ist. Folglich muss die Prozessflüssigkeit 16 in der Zwischenkammer 108 schräg oder senkrecht zu der Drehachse strömen, um den Versatz zwischen dem ersten Drehwinkelintervall und dem zweiten Drehwinkelintervall zu überbrücken.

Der zweite Strömungspfad umfasst eine Bypassleitung 122. Die Bypassleitung 122 ist Teil der Gehäusekonstruktion 40 und an einen Hauptkörper 126 der Gehäusekonstruktion 40 angeschlossen.

Ein Fluideinlass der Bypassleitung 122 ist mit einer Druckseitenkammer 124 fluidisch verbunden, die der Druckseite der Hauptförderkomponente 48 nachgeordnet ist. Die Druckseitenkammer 124 und die Zwischenkammer 108 sind auf unterschiedlichen Seiten des ersten Gehäuseabschnitts 52 angeordnet.

Ein Fluidauslass der Bypassleitung 122 ist mit einer Saugseitenkammer 128 fluidisch verbunden, die der Saugseite der Drosselförderkomponente 58 vorgeordnet ist. Die Saugseitenkammer 128 und die Zwischenkammer 108 sind auf unterschiedlichen Seiten des zweiten Gehäuseabschnitts 66 angeordnet.

Wie bspw. in Figur 5 zu sehen ist, sind die Laufräder 92, 96 in den Gehäuseabschnitten 52, 66 exzentrisch angeordnet. Das hat zur Folge, dass zwischen den Laufrädern 92, 96 und den Gehäusewandungen 82, 86 der Gehäuseabschnitte 52, 66 jeweils ein Radialspalt 130, 132 gebildet ist. Ein erster Radialspalt 130 ist zwischen dem ersten Laufrad 92 und der Gehäusewandung 82 des ersten Gehäuseabschnitts 52 gebildet. Ein zweiter Radialspalt 132 ist zwischen dem zweiten Laufrad 96 und der Gehäusewandung 86 des zweiten Gehäuseabschnitts 66 gebildet. In den Radialspalten 130, 132 können sich im Betrieb der Fördereinrichtung 32 Prozessflüssigkeit 16 und insbesondere in der Prozessflüssigkeit 16 enthaltene Feststoffpartikel sammeln, wie in Figur 7 gezeigt. Solche Feststoffpartikel können bspw. Katalysatorpartikel 80 umfassen, welche die Aufspaltung des polymerhaltigen Ausgangsmaterials katalysieren. Die Prozessflüssigkeit 16 wird in den Radialspalten 130, 132 intensiv verwirbelt, was mit einer starken Erwärmung der Prozessflüssigkeit 16 einhergeht. Zudem kann die Oberfläche der Katalysatorpartikel 80 aufgrund von Reibung abgetragen werden, wodurch die Katalysatorpartikel 80 kontinuierlich erneuert werden. **In** dem dritten Ausführungsbeispiel sind die Radialspalte 130, 132 als exzentrische Ringspalte ausgebildet.

Die Gehäusekonstruktion 40 weist außerdem eine Saugseitenkammer 134 auf, die der Saugseite der Hauptförderkomponente 48 vorgeordnet ist. Der Fluideinlass 44 der Fluidpassage 42 mündet in die Saugseitenkammer 134. Zwischen der Saugseitenkammer 134 und dem ersten Gehäuseabschnitt 52 ist ein Trennelement 136 angeordnet, vorliegend eine Trennwand, das im Folgenden auch als drittes Trennelement 136 bezeichnet wird. Das dritte Trennelement 136 weist einen dritten Fluiddurchlass 138 auf, durch den die Saugseitenkammer 134 mit dem ersten Gehäuseabschnitt 52 fluidisch verbunden ist (s. Figur 6). Der dritte Fluiddurchgang 138 ist in einem Bereich des dritten Trennelements 136 ausgebildet, der vollständig innerhalb des Außenradius des ersten Laufrads 92 angeordnet ist.

Zwischen der Druckseitenkammer 124 und dem ersten Gehäuseabschnitt 52 ist ein Trennelement 104 angeordnet, vorliegend eine Trennwand, das im Folgenden auch als viertes Trennelement 104 bezeichnet wird. Das vierte Trennelement 104 weist mehrere Fluiddurchlässe 106 auf, durch welche die Druckseitenkammer 124 mit dem ersten Gehäuseabschnitt 52 fluidisch verbunden ist (s. Figur 6).

Vorliegend sind mehrere radial äußere Fluiddurchlässe 106A vorhanden. Die Fluiddurchlässe 106A sind in Drehrichtung der Antriebswelle 68 hintereinander angeordnet, vorliegend radial auf derselben Höhe.

Vorliegend ist zudem ein radial innerer Fluiddurchlass 106B vorhanden. Der Fluiddurchlass 106B ist näher an der Drehachse der Antriebswelle 68 angeordnet als die Fluiddurchlässe 106A.

Die Gehäusekonstruktion 40 weist außerdem eine Druckseitenkammer 140 auf, die der Druckseite 142 der Drosselförderkomponente 58 nachgeordnet ist. Der Fluidauslass 46 der Fluidpassage 42 mündet in die Druckseitenkammer 140. Zwischen der Druckseitenkammer 140 und dem zweiten Gehäuseabschnitt 66 ist ein fünftes Trennelement 144 angeordnet, vorliegend eine Trennwand. Das fünfte Trennelement 144 weist wenigstens einen fünften Fluiddurchlass auf (in den Figuren nicht zu sehen), durch den der zweite Gehäuseabschnitt 66 mit der Druckseitenkammer 140 fluidisch verbunden ist.

Zwischen der Saugseitenkammer 128 und dem zweiten Gehäuseabschnitt 66 ist ein sechstes Trennelement 146 angeordnet, vorliegend eine Trennwand. Das sechste Trennelement 146 weist wenigstens einen sechsten Fluiddurchlass auf (in den Figuren nicht zu sehen), durch den der zweite Gehäuseabschnitt 66 mit der Saugseitenkammer 128 fluidisch verbunden ist.

Die Saugseitenkammer 134 ist nur durch den ersten Gehäuseabschnitt 52, also das Innere des ersten Gehäuseabschnitts 52, mit der Druckseitenkammer 124 fluidisch verbunden. Entsprechend ist die Saugseitenkammer 128 nur durch den zweiten Gehäuseabschnitt 66, also das Innere des zweiten Gehäuseabschnitts 66, mit der Druckseitenkammer 140 fluidisch verbunden.

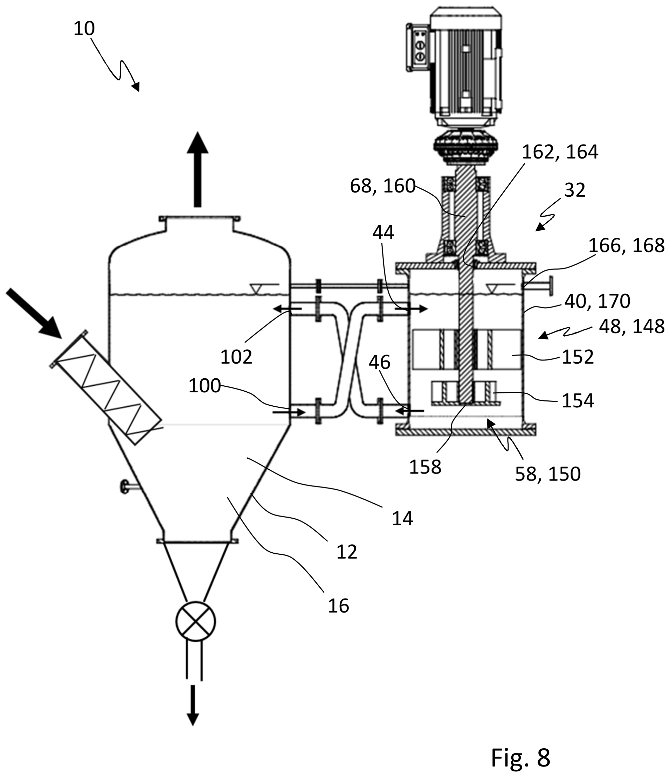

Im Folgenden wird mit Bezug auf Figur 8 ein viertes Ausführungsbeispiel der Fördereinrichtung 32 näher erläutert. Hierzu zeigt Figur 8 eine schematische Darstellung der Anlage 10 mit der Fördereinrichtung 32 gemäß dem vierten Ausführungsbeispiel.

Bei dem vierten Ausführungsbeispiel ist die Hauptförderkomponente 48 eine erste Propellerpumpe 148 und die Drosselförderkomponente 58 eine zweite Propellerpumpe 150. Die erste Propellerpumpe 148 weist als ersten Förderkörper 50 einen ersten Propeller 152 auf. Die zweite Propellerpumpe 150 weist als zweiten Förderkörper 60 einen zweiten Propeller 154 auf.

Die konstruktive Förderkapazität der ersten Propellerpumpe 148 ist größer als die der zweiten Propellerpumpe 150, was vorliegend durch die unterschiedlichen Durchmesser der Propeller 152, 154 erreicht wird. Der erste Propeller 152 und der zweite Propeller 154 sind auf einer gemeinsamen Antriebswelle 68 drehfest angeordnet.

Bei dem vierten Ausführungsbeispiel ist die Fördereinrichtung 32 derart verbaut, dass die Drehachse vertikal verläuft. Das untere Ende 158 der Antriebswelle 68 endet innerhalb der Gehäusekonstruktion 40. Vorliegend ist der zweite Propeller 154 an dem unteren Ende 158 der Antriebswelle 68 angeordnet.

Ein oberer Endabschnitt 160 der Antriebswelle 68 ragt durch eine Durchgangsöffnung 162 aus der Gehäusekonstruktion 40 heraus. Vorliegend ist der obere Endabschnitt 160 durch ein im Bereich der Durchgangsöffnung 162 gebildetes Drehlager 164 drehbar gelagert.

Bei dem vierten Ausführungsbeispiel ist die Antriebswelle 68 also nur einseitig gelagert, nämlich im Bereich des oberen Endabschnitts 160. Das untere Ende 158 der Antriebswelle 68 liegt frei innerhalb der Gehäusekonstruktion 40. Folglich ist im unteren Bereich der Gehäusekonstruktion 40 keine Durchgangsöffnung für einen unteren Endabschnitt der Antriebswelle 68 vorhanden, die gegenüber dem Äußeren abgedichtet werden müsste. Dadurch wird die Abdichtung der Gehäusekonstruktion 40 wesentlich erleichtert. Insbesondere im Zusammenhang mit einer Recyclinganlage 10 können Dichtungen und/oder Drehlager durch die erwärmte Prozessflüssigkeit 16 leicht geschädigt werden, was den Wartungsbedarf steigern würde.

Im Betrieb wird der Prozessraum 14 nur derart weit mit Prozessflüssigkeit 16 befüllt, dass der Flüssigkeitsspiegel in der Fluidpassage 42 unterhalb der Durchgangsöffnung 162 liegt, durch die der obere Endabschnitt 160 der Antriebswelle 68 aus der Gehäusekonstruktion 40 austritt.

Die Gehäusekonstruktion 40 weist vorliegend außerdem einen Überlaufschutz 166 zum Schutz des Drehlagers 164 und etwaiger Dichtungen auf. Der Überlaufschutz 166 wird durch eine oder mehrere Durchgangsöffnungen 168 in einer Seitenwandung 170 der Gehäusekonstruktion 40 gebildet. Die Durchgangsöffnungen 168 sind, bezogen auf die Drehachse der Antriebswelle 68, axial zwischen dem Fluideinlass 44 und der Durchgangsöffnung 162 in der Seitenwandung 170 ausgebildet. An die Durchgangsöffnung 168 kann im Betrieb der Anlage 10 ein inertisierter Auffangbehälter angeschlossen sein.

Die Hauptförderkomponente 48 ist derart ausgebildet, dass sie die Prozessflüssigkeit 16 von oben nach unten durch die Fluidpassage 42 fördert. Dadurch kann vermieden werden, dass Prozessflüssigkeit 16 im Betrieb in Richtung der Durchgangsöffnung 162 spritzt und zum Drehlager 164 bzw. zu etwaigen Dichtungen gelangt.

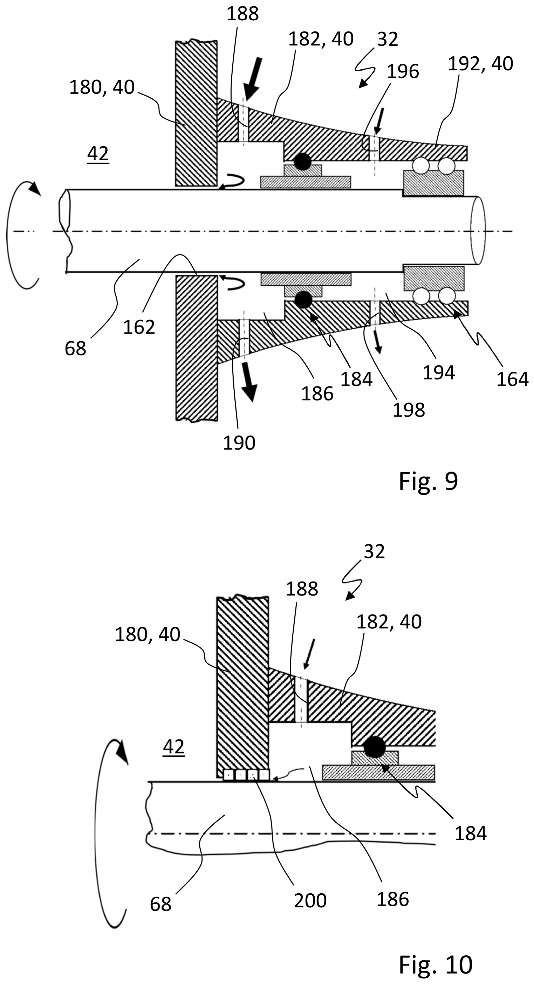

Figur 9 zeigt eine Detailansicht einer Fördereinrichtung 32 im Bereich eines Durchtritts einer Antriebswelle 68 durch eine Gehäusewandung 180 der Gehäusekonstruktion 40. Die Antriebswelle 68 ragt durch eine Durchgangsöffnung 162 hindurch, die in der Gehäusewandung 180 der Gehäusekonstruktion 40 ausgebildet ist. Auf der Antriebswelle 68 sind ein oder mehrere Förderkörper 50, 60 drehfest angeordnet, wie zuvor im Zusammenhang mit den verschiedenen Fördereinrichtungen 32 erläutert. Die Förderkörper 50, 60 sind nicht zu sehen, befinden sich aber in der Fluidpassage 42 auf der in Figur 9 linken Seite der Gehäusewandung 180.

Die Gehäusekonstruktion 40 weist auf der von der Fluidpassage 42 abgewandten Seite einen Dichtabschnitt 182 auf. Der Dichtabschnitt 182 kann einstückig mit der Gehäusewandung 180 ausgebildet sein. Es kann sich aber auch um ein separat von der Gehäusewandung 180 ausgebildetes Anbauteil handeln. Zwischen dem Dichtabschnitt 182 und der Antriebswelle 68 ist eine Fluiddichtung 184 angeordnet. Die Fluiddichtung 184 umschließt die Antriebswelle 68 und wirkt dichtend zwischen der Antriebswelle 68 und dem Dichtabschnitt 182.

Der Dichtabschnitt 182 definiert zwischen der Fluiddichtung 184 und der Gehäusewandung 180 einen die Antriebswelle 68 umgebenden Fluidraum 186. Die Querschnittsfläche des Fluidraums 186 ist größer als die Querschnittsfläche der Durchgangsöffnung 162. Der Fluidraum 186 wird auf der einen Seite durch die Fluiddichtung 184 begrenzt. Auf der anderen Seite ist der Fluidraum 186 durch die Durchgangsöffnung 162 mit der Fluidpassage 42 fluidisch verbunden, nämlich durch einen Spalt zwischen der Antriebswelle 68 und der Gehäusewandung 180. Durch den Spalt kann im Betrieb der Fluidverarbeitungsanlage 10 Prozessflüssigkeit 16 (inklusive in der Prozessflüssigkeit 16 suspendierter Feststoffe) in den Fluidraum 186 und folglich zu der Fluiddichtung 184 gelangen.

Der Dichtabschnitt 182 weist einen Zuführdurchgang 188 auf, der zwischen der Fluiddichtung 184 und der Durchgangsöffnung 162 in den Fluidraum 186 mündet. Vorliegend ist der Zuführdurchgang 188 eine Bohrung, die sich durch den Dichtabschnitt 182 erstreckt. Durch den Zuführdurchgang 188 kann im Betrieb der Fluidverarbeitungsanlage 10 dem Fluidraum 186 eine Spülflüssigkeit zugeführt werden. Dadurch kann besonders sicher vermieden werden, dass suspendierte Feststoffe zur Fluiddichtung 184 gelangen und die Fluiddichtung 184 beschädigen.

Der Dichtabschnitt 182 weist vorliegend außerdem einen Ablassdurchgang 190 auf, der gleichfalls zwischen der Fluiddichtung 184 und der Durchgangsöffnung 162 in den Fluidraum 186 mündet. Durch den Ablassdurchgang 190 kann Flüssigkeit, insbesondere Spülflüssigkeit, aus dem Fluidraum 186 abgelassen werden.

Die Gehäusekonstruktion 40 weist einen Lagerabschnitt 192 auf, der sich an den Dichtabschnitt 182 anschließt. Vorliegend sind der Dichtabschnitt 182 und der Lagerabschnitt 192 miteinander monolithisch ausgebildet. Die Antriebswelle 68 ist durch ein Drehlager 164 drehbar gelagert, das zwischen der Antriebswelle 68 und dem Lagerabschnitt 192 wirkt. Der Lagerabschnitt 192 definiert einen die Antriebswelle 68 umgebenden Wellenraum 194. Der Wellenraum 194 ist auf der einen Seite durch das Drehlager 164 begrenzt. Auf der anderen Seite ist der Wellenraum 194 durch die Fluiddichtung 184 begrenzt.

Der Lagerabschnitt 192 weist einen Zuführdurchgang 196 auf, der zwischen der Fluiddichtung 184 und dem Drehlager 164 in den Wellenraum 194 mündet. Der Lagerabschnitt 192 weist vorliegend außerdem einen Ablassdurchgang 198 auf, der gleichfalls zwischen der Fluiddichtung 184 und dem Drehlager 164 in den Wellenraum 194 mündet.

Die in Figur 9 dargestellte Konstruktion kann im Zusammenhang mit den zuvor erläuterten Fördereinrichtungen 32 verwendet werden. Es ergibt sich allgemein der Vorteil, dass die Fluiddichtung 184 vor suspendierten Feststoffen geschützt ist. Die Förderkomponenten 48, 58 können dabei beispielsweise als Turbinenpumpen, als Schraubenspindelpumpen oder als Propellerpumpen ausgebildet sein.

Figur 10 zeigt eine Detailansicht einer weiteren Fördereinrichtung 32 im Bereich eines Durchtritts einer Antriebswelle 68 durch eine Gehäusewandung 180 der Gehäusekonstruktion 40. Die in Figur 10 dargestellte Fördereinrichtung 32 unterscheidet sich von der in Figur 9 dargestellten Fördereinrichtung 32 dadurch, dass eine weitere Fluiddichtung 200 vorhanden ist, die im Bereich der Durchgangsöffnung 162 zwischen der Gehäusewandung 180 und der Antriebswelle 68 angeordnet ist. Durch die weitere Fluiddichtung 200 wird das Eindringen von Feststoffen in den Fluidraum 186 weiter erschwert. Außerdem kann die Menge an Spülflüssigkeit verringert werden, die erforderlich ist, um ein Eindringen von Feststoffen sicher zu verhindern.

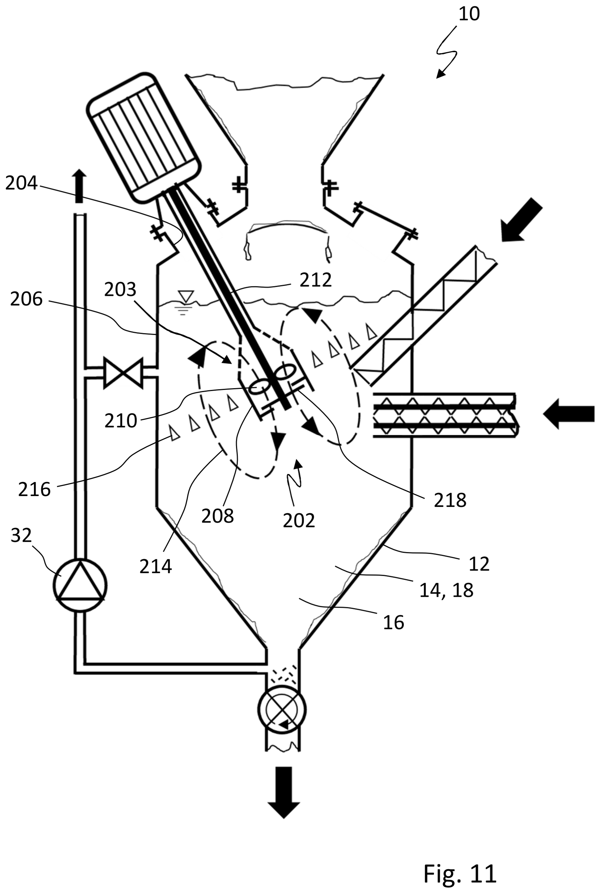

In Figur 11 ist eine Fluidverarbeitungsanlage 10 gemäß einem weiteren Ausführungsbeispiel dargestellt. Die Fluidverarbeitungsanlage 10 weist eine Fördereinrichtung 32 auf, die eine Hauptförderkomponente und eine Drosselförderkomponente aufweisen kann, wie zuvor beschrieben.

Die Fluidverarbeitungsanlage 10 weist außerdem einen Umpumpmischer 202 auf. Der Umpumpmischer 202 ragt in den Prozessbehälter 12 hinein, vorliegend in den unteren Prozessteilraum 20. Der Umpumpmischer 202 ragt durch eine Durchgangsöffnung 204 in den Prozessbehälter 12 hinein, die in einer Wandung 206 des Prozessbehälters 12 ausgebildet ist. Der Umpumpmischer 202 ist dazu ausgebildet, die Prozessflüssigkeit 16 durch Umpumpen zu durchmischen. Hierzu weist der Umpumpmischer 202 eine Umpumpeinheit 203 auf, die einen Rohrabschnitt 208 aufweist, in dem ein Propeller 210 drehbar gelagert ist. Der Propeller 210 ist auf einer Pumpenwelle 212 des Umpumpmischers 202 drehfest angeordnet. Vorliegend beträgt ein Winkel zwischen der Pumpenwelle 212 und der Vertikalen etwa 30°. Im Betrieb des Umpumpmischers 202 wird Prozessflüssigkeit 16 an einem Ende des Rohrabschnitts 208 in den Rohrabschnitt 208 eingezogen und an dem anderen Ende des Rohrabschnitts 208 wieder ausgestoßen. Es bilden sich außerhalb des Rohrabschnitts 208 Fluidströme 214 aus.

Die Fluidverarbeitungsanlage 10 weist mehrere stationäre Strömungsbrechelemente 216 auf, die im Bereich des Umpumpmischers 202 an der Innenseite des Prozessbehälters 12 angeordnet sind. Die Strömungsbrechelemente 216 sind derart angeordnet, dass sie die Fluidströme 214 brechen und dadurch die Mischwirkung des Umpumpmischers 202 verbessern. Vorliegend sind die Strömungsbrechelemente 216 als dreieckige Strömungsbrechprofile ausgebildet. Die Strömungsbrechprofile sind derart angeordnet, dass Spitzen der Strömungsbrechprofile schräg nach oben orientiert sind. Vorliegend sind die Strömungsbrechelemente in einer gemeinsamen Ebene angeordnet, die senkrecht zu der Drehachse der Pumpenwelle 212 ausgerichtet ist. Durch eine solche Anordnung werden die Fluidströme 214 besonders effektiv gebrochen.

Der Umpumpmischer 202 weist vorliegend eine rotierende Schneideinheit 218 auf. Die Schneideinheit 218 ist mit der Pumpenwelle 212 drehfest verbunden und wird folglich bei einer Drehung der Pumpenwelle 212 mit der Pumpenwelle 212 und dem Propeller 210 mitgedreht.

Vorliegend ist die Schneideinheit 218 an einem freien Ende der Pumpenwelle 212 angeordnet. Durch die Schneideinheit 218 werden in der Prozessflüssigkeit 16 suspendierte Feststoffe zerkleinert, insbesondere nicht geschmolzenes polymeres Ausgangsmaterial.

Der in Figur 11 dargestellte Umpumpmischer 202 kann in Kombination mit den zuvor erläuterten Fördereinrichtungen 32 verwendet werden. Die Förderkomponenten 48, 58 können dabei beispielsweise als Turbinenpumpen, als Schraubenspindelpumpen oder als Propellerpumpen ausgebildet sein. Es ergibt sich dabei allgemein der Vorteil, dass der Umpumpmischer 202 eine lokale Anreicherung von Feststoffen verhindert. Ist die Schneideinheit 218 vorhanden, so unterstützt der Umpumpmischer 202 die Fördereinrichtung 32 dadurch, dass auch durch den Umpumpmischer 202 eine Zerkleinerung von Feststoffen stattfindet. Unabhängig von der Ausbildung der Fördereinrichtung 32 hat der Umpumpmischer 202 den Vorteil, dass durch die Umwälzung der Prozessflüssigkeit 16 im Prozessbehälter 12 die Ausgasung von gasförmigen Produkten gefördert wird. Dieser Vorteil kommt insbesondere bei der Sekundärressourcengewinnung aus polymerhaltigem Ausgangsmaterial zum Tragen.

Es können auch mehr als nur ein Umpumpmischer 202 vorhanden sein.

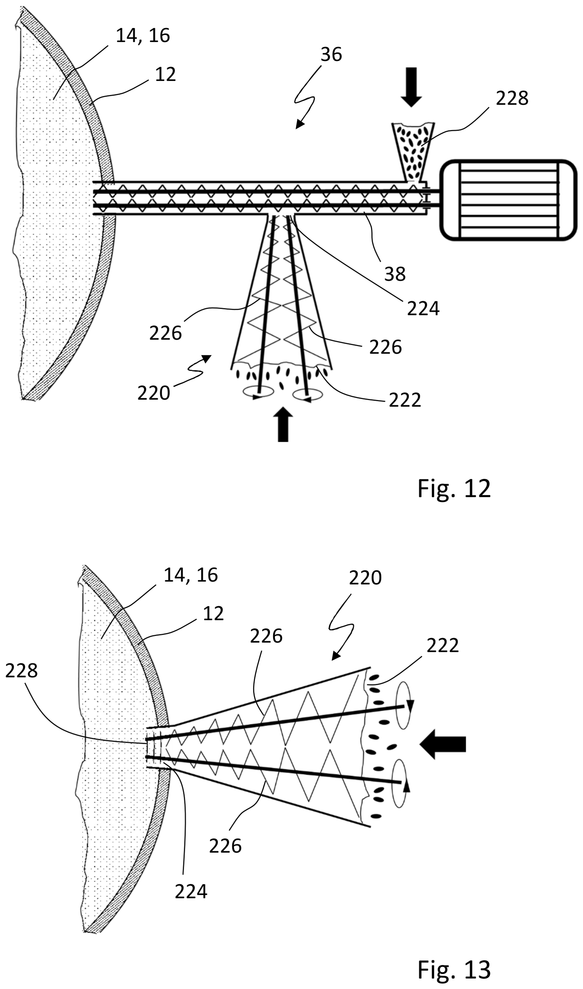

In Figur 12 ist ein Ausführungsbeispiel der Zuführeinrichtung 36 dargestellt, bei dem die Zuführeinrichtung 36 eine Kompaktiereinheit 220 mit einem Materialeintritt 222 und einem Materialaustritt 224 aufweist. Die Kompaktiereinheit 220 weist zwei drehbar gelagerte Schnecken 226 auf, die in Richtung des Materialaustritts 224 konisch zulaufen. Eine solche Kompaktiereinheit 220 ist besonders von Vorteil, wenn die Fluidverarbeitungsanlage 10 zur Sekundärressourcengewinnung aus polymerhaltigen Ausgangsmaterialien verwendet wird. Solche Ausgangsmaterialien werden durch die Kompaktiereinheit 220 verdichtet, wodurch deren Handhabung erleichtert wird.

Bei dem in Figur 12 dargestellten Ausführungsbeispiel weist die Zuführeinrichtung 36 außerdem einen Schneckenextruder 38 auf, der zwischen dem Prozessbehälter 12 und der Kompaktiereinheit 220 angeordnet ist. Der Materialaustritt 224 der Kompaktiereinheit 220 mündet in den Schneckenextruder 38. Der Schneckenextruder 38 hat den Vorteil, dass das Ausgangsmaterial bereits vor Erreichen des Prozessbehälters 12 vorgewärmt werden kann. Dadurch wird die weitere Verarbeitung des Ausgangsmaterials in der Fluidverarbeitungsanlage 10 erleichtert.

Bei dem in Figur 12 dargestellten Ausführungsbeispiel weist der Schneckenextruder 38 eine optionale weitere Materialzufuhr 228 auf.

Die in Figur 12 dargestellte Kompaktiereinheit 220 kann in Kombination mit den zuvor erläuterten Fördereinrichtungen 32 verwendet werden. Die Förderkomponenten 48, 58 können dabei beispielsweise als Turbinenpumpen, als Schraubenspindelpumpen oder als Propellerpumpen ausgebildet sein. Es ergibt sich dabei allgemein der Vorteil, dass zugeführte Ausgangsmaterialien verdichtet werden. Dieser Vorteil kommt insbesondere bei der Sekundärressourcengewinnung aus polymerhaltigem Ausgangsmaterial zum Tragen. Eine Zuführeinrichtung 36 mit Kompaktiereinheit 220 kann auch in Kombination mit dem Umpumpmischer 202 verwendet werden. Dabei ist vorzugsweise vorgesehen, dass der Materialaustritt der Zufüreinrichtung 36 auf Höhe des Umpumpmischers 202, insbesondere auf Höhe der Umpumpeinheit 203, in den Prozessbehälter 12 mündet.

In Figur 13 ist ein Ausführungsbeispiel der Zuführeinrichtung 36 dargestellt, bei dem der Materialaustritt 224 der Kompaktiereinheit 220 direkt in den Prozessbehälter 12 mündet. Im Bereich des Materialaustritts 224 weist die Kompaktiereinheit 220 mehrere Schneidelemente 228 auf, die mit jeweils einer der Schnecken 226 drehfest verbunden sind. Durch die Schneidelemente 228 findet eine Zerkleinerung des Ausgangsmaterials beim Einbringen in den Prozessbehälter 12 statt.

Die Offenbarung umfasst insbesondere die folgenden Ausführungsformen:
Ausführungsform 1: Fluidverarbeitungsanlage, insbesondere zur Gewinnung von Sekundärressourcen aus polymerhaltigen Ausgangsmaterialien, die Fluidverarbeitungsanlage umfassend:
   - einen ein- oder mehrteiligen Prozessbehälter, der einen fluidisch verbundenen Prozessraum zur Aufnahme einer Prozessflüssigkeit definiert; und
   - wenigstens eine Fördereinrichtung zum Umwälzen der Prozessflüssigkeit, die Fördereinrichtung umfassend:
      ∘ eine Gehäusekonstruktion, die eine Fluidpassage mit wenigstens einem Fluideinlass und wenigstens einem Fluidauslass definiert;
      ∘ eine Hauptförderkomponente, die dazu ausgebildet ist, die Prozessflüssigkeit von dem Fluideinlass zu dem Fluidauslass durch die Fluidpassage zu fördern, wobei die Hauptförderkomponente wenigstens einen ersten Förderkörper aufweist, der in der Fluidpassage drehbar angeordnet ist; und
      ∘ eine Drosselförderkomponente zur Erhöhung des hydraulischen Widerstands in der Fluidpassage, wobei die Drosselförderkomponente wenigstens einen zweiten Förderkörper aufweist, der zwischen dem ersten Förderkörper und dem Fluidauslass in der Fluidpassage drehbar angeordnet ist.
Ausführungsform 2: Fluidverarbeitungsanlage nach Ausführungsform 1, dadurch gekennzeichnet, dass die Förderkomponenten dazu ausgebildet sind, die Prozessflüssigkeit in dieselbe Förderrichtung durch die Fluidpassage zu fördern.
Ausführungsform 3: Fluidverarbeitungsanlage nach Ausführungsform 1, dadurch gekennzeichnet, dass die Förderkomponenten dazu ausgebildet sind, die Prozessflüssigkeit in entgegengesetzte Förderrichtungen durch die Fluidpassage zu fördern.
Ausführungsform 4: Fluidverarbeitungsanlage nach einer der vorhergehenden Ausführungsformen, dadurch gekennzeichnet, dass die Hauptförderkomponente in einem ersten Gehäuseabschnitt der Gehäusekonstruktion angeordnet ist, und/oder dass die Drosselförderkomponente in einem zweiten Gehäuseabschnitt der Gehäusekonstruktion angeordnet ist.
Ausführungsform 5: Fluidverarbeitungsanlage nach einer der vorhergehenden Ausführungsformen, dadurch gekennzeichnet, dass die Hauptförderkomponente eine größere konstruktive Förderkapazität aufweist als die Drosselförderkomponente.
Ausführungsform 6: Fluidverarbeitungsanlage nach der vorhergehenden Ausführungsform, dadurch gekennzeichnet, dass das Verhältnis des freien inneren Volumens des ersten Gehäuseabschnitts zu dem freien inneren Volumen des zweiten Gehäuseabschnitts zwischen 1,1 : 1 und 20 : 1 beträgt, vorzugsweise zwischen 1,25 : 1 und 5 : 1, besonders bevorzugt zwischen 2 : 1 und 3 : 1.
Ausführungsform 7: Fluidverarbeitungsanlage nach einer der Ausführungsformen 5 und 6, dadurch gekennzeichnet, dass die Hauptförderkomponente derart ausgebildet ist, dass sie bei einer ersten Drehzahl einen ersten Eigenvolumenstrom fördert, dass die Drosselförderkomponente derart ausgebildet ist, dass sie bei der ersten Drehzahl einen zweiten Eigenvolumenstrom fördert, und dass das Verhältnis des ersten Eigenvolumenstroms zu dem zweiten Eigenvolumenstrom zwischen 30 : 1 und 1,5 : 1 beträgt, vorzugsweise zwischen 10 : 1 und 1,5 : 1.
Ausführungsform 8: Fluidverarbeitungsanlage nach einer der Ausführungsformen 4 bis 7, dadurch gekennzeichnet, dass zwischen der Drosselförderkomponente und der Gehäusewandung des zweiten Gehäuseabschnitts ein Spalt gebildet ist, durch den die Prozessflüssigkeit an der Drosselförderkomponente vorbeiströmen kann.
Ausführungsform 9: Fluidverarbeitungsanlage nach einer der vorhergehenden Ausführungsformen, dadurch gekennzeichnet, dass das Verhältnis des Einlassquerschnitts der Hauptförderkomponente zum Auslassquerschnitt der Hauptförderkomponente zwischen 10 : 1 und 1 : 10 beträgt, vorzugsweise zwischen 2 : 1 und 1 : 2, besonders bevorzugt zwischen 1,2 : 1,0 und 1,0 : 1,2.
Ausführungsform 10: Fluidverarbeitungsanlage nach einer der vorhergehenden Ausführungsformen, dadurch gekennzeichnet, dass das Verhältnis des Einlassquerschnitts der Drosselförderkomponente zum Auslassquerschnitt der Drosselförderkomponente zwischen 10 : 1 und 1 : 1 beträgt, vorzugsweise zwischen 6 : 1 und 2 : 1, besonders bevorzugt zwischen 5 : 1 und 2,5 : 1,0.
Ausführungsform 11: Fluidverarbeitungsanlage nach einer der vorhergehenden Ausführungsformen, dadurch gekennzeichnet, dass wenigstens ein erster Förderkörper mit wenigstens einem zweiten Förderkörper drehfest verbunden ist.
Ausführungsform 12: Fluidverarbeitungsanlage nach einer der vorhergehenden Ausführungsformen, dadurch gekennzeichnet, dass wenigstens ein erster Förderkörper unabhängig von dem oder den zweiten Förderkörpern drehbar ist, und/oder dass wenigstens ein zweiter Förderkörper unabhängig von dem oder den ersten Förderkörpern drehbar ist.
Ausführungsform 13: Fluidverarbeitungsanlage nach einer der vorhergehenden Ausführungsformen, dadurch gekennzeichnet, dass die Fördereinrichtung eine Umgehungsleitung mit einer Durchflussregelarmatur aufweist, wobei die Umgehungsleitung dazu ausgebildet ist, wenigstens einen Teil der Prozessflüssigkeit an der Drosselförderkomponente vorbeizuleiten.
Ausführungsform 14: Fluidverarbeitungsanlage nach einer der vorhergehenden Ausführungsformen, dadurch gekennzeichnet, dass die Hauptförderkomponente als erste Turbinenpumpe ausgebildet ist und wenigstens ein erstes Laufrad aufweist, und/oder dass die Drosselförderkomponente als zweite Turbinenpumpe ausgebildet ist und wenigstens ein zweites Laufrad aufweist.
Ausführungsform 15: Fluidverarbeitungsanlage nach der vorhergehenden Ausführungsform, dadurch gekennzeichnet, dass das erste Laufrad exzentrisch in dem ersten Gehäuseabschnitt angeordnet ist, und/oder dass das zweite Laufrad exzentrisch in dem zweiten Gehäuseabschnitt angeordnet ist.
Ausführungsform 16: Fluidverarbeitungsanlage nach einer der Ausführungsformen 14 und 15, dadurch gekennzeichnet, dass die Druckseite der ersten Turbinenpumpe (88) durch zwei Strömungspfade mit der Saugseite der zweiten Turbinenpumpe (58) fluidisch verbunden ist.
Ausführungsform 17: Fluidverarbeitungsanlage nach einer der Ausführungsformen 14 bis 16, dadurch gekennzeichnet, dass die Druckseite der ersten Turbinenpumpe durch eine axial zwischen dem ersten Laufrad und dem zweiten Laufrad angeordnete Zwischenkammer mit der Saugseite der zweiten Turbinenpumpe fluidisch verbunden ist.
Ausführungsform 18: Fluidverarbeitungsanlage nach der vorhergehenden Ausführungsform, dadurch gekennzeichnet, dass zwischen der Druckseite der ersten Turbinenpumpe und der Zwischenkammer ein erstes Trennelement mit einem oder mehreren ersten Fluiddurchlässen angeordnet ist, dass zwischen der Saugseite der zweiten Turbinenpumpe und der Zwischenkammer ein zweites Trennelement mit einem oder mehreren zweiten Fluiddurchlässen angeordnet ist, und dass der erste Fluiddurchlass oder die ersten Fluiddurchlässe, bezogen auf die Drehachse des ersten Laufrads, in einem anderen Drehwinkelintervall angeordnet ist/sind als der zweite Fluiddurchlass oder die zweiten Fluiddurchlässe.
Ausführungsform 19: Fluidverarbeitungsanlage nach einer der Ausführungsformen 14 bis 18, dadurch gekennzeichnet, dass die Druckseite der ersten Turbinenpumpe durch eine Bypassleitung mit der Saugseite der zweiten Turbinenpumpe fluidisch verbunden ist.
Ausführungsform 20: Fluidverarbeitungsanlage nach der vorhergehenden Ausführungsform, dadurch gekennzeichnet, dass die Bypassleitung mit einer der Druckseite der ersten Turbinenpumpe nachgeschalteten Druckseitenkammer fluidisch verbunden ist, und/oder dass die Bypassleitung mit einer der Saugseite der zweiten Turbinenpumpe vorgeschalteten Saugseitenkammer fluidisch verbunden ist.
Ausführungsform 21: Fluidverarbeitungsanlage nach einer der Ausführungsformen 14 bis 20, dadurch gekennzeichnet, dass der Saugseite der ersten Turbinenpumpe eine Saugseitenkammer vorgeschaltet ist, wobei zwischen der Saugseitenkammer und der Saugseite der ersten Turbinenpumpe ein Trennelement mit wenigstens einem Fluiddurchlass angeordnet ist, und wobei der Fluiddurchlass in einem Bereich des Trennelements ausgebildet ist, der innerhalb des Außenradius des ersten Laufrads angeordnet ist.
Ausführungsform 22: Fluidverarbeitungsanlage nach einer der vorhergehenden Ausführungsformen, dadurch gekennzeichnet, dass die Hauptförderkomponente als erste Schraubenspindelpumpe ausgebildet ist und wenigstens eine erste Schraubenspindel aufweist, und/oder dass die Drosselförderkomponente als zweite Schraubenspindelpumpe ausgebildet ist und wenigstens eine zweite Schraubenspindel aufweist.
Ausführungsform 23: Fluidverarbeitungsanlage nach der vorhergehenden Ausführungsform, dadurch gekennzeichnet, dass die erste Schraubenspindel einen größeren Durchmesser aufweist als die zweite Schraubenspindel.
Ausführungsform 24: Fluidverarbeitungsanlage nach einer der Ausführungsformen 22 und 23, dadurch gekennzeichnet, dass die erste Schraubenspindelpumpe zwei ineinandergreifende erste Schraubenspindeln aufweist, und/oder dass die zweite Schraubenspindelpumpe zwei ineinandergreifende zweite Schraubenspindeln aufweist.
Ausführungsform 25: Fluidverarbeitungsanlage nach einer der vorhergehenden Ausführungsformen, dadurch gekennzeichnet, dass die Hauptförderkomponente als erste Propellerpumpe ausgebildet ist und wenigstens einen ersten Propeller aufweist, und/oder dass die Drosselförderkomponente als zweite Propellerpumpe ausgebildet ist und wenigstens einen zweiten Propeller aufweist.
Ausführungsform 26: Fluidverarbeitungsanlage nach einer der vorhergehenden Ausführungsformen, dadurch gekennzeichnet, dass die Fördereinrichtung wenigstens eine Antriebswelle aufweist, wobei wenigstens ein erster Förderkörper und/oder wenigstens ein zweiter Förderkörper auf der Antriebswelle drehfest angeordnet sind/ist.
Ausführungsform 27: Fluidverarbeitungsanlage nach der vorhergehenden Ausführungsform, dadurch gekennzeichnet, dass die Antriebswelle durch eine Durchgangsöffnung einer Gehäusewandung der Gehäusekonstruktion hindurchragt, wobei die Gehäusekonstruktion auf einer von der Fluidpassage abgewandten Seite der Gehäusewandung einen Dichtabschnitt aufweist, wobei zwischen dem Dichtabschnitt und der Antriebswelle eine Fluiddichtung angeordnet ist, und wobei der Dichtabschnitt zwischen der Durchgangsöffnung und der Fluiddichtung einen Fluidraum definiert, dessen Querschnittsfläche größer ist als die Querschnittsfläche der Durchgangsöffnung.
Ausführungsform 28: Fluidverarbeitungsanlage nach der vorhergehenden Ausführungsform, dass der Dichtabschnitt einen Zuführdurchgang für eine Spülflüssigkeit aufweist, wobei der Zuführdurchgang zwischen der Fluiddichtung und der Durchgangsöffnung in den Fluidraum mündet.
Ausführungsform 29: Fluidverarbeitungsanlage nach einer der Ausführungsformen 27 und 28, dadurch gekennzeichnet, dass im Bereich der Durchgangsöffnung eine weitere Fluiddichtung angeordnet ist.
Ausführungsform 30: Fluidverarbeitungsanlage nach der vorhergehenden Ausführungsform, dadurch gekennzeichnet, dass ein unteres Längsende der Antriebswelle innerhalb der Gehäusekonstruktion angeordnet ist.
Ausführungsform 31: Fluidverarbeitungsanlage nach der vorhergehenden Ausführungsform, dadurch gekennzeichnet, dass das untere Längsende ungelagert in der Gehäusekonstruktion endet.
Ausführungsform 32: Fluidverarbeitungsanlage nach einer der Ausführungsformen 26 bis 31, dadurch gekennzeichnet, dass die Antriebswelle einen oberen Endabschnitt aufweist, der aus der Gehäusekonstruktion herausragt und durch ein Drehlager drehbar gelagert ist.
Ausführungsform 33: Fluidverarbeitungsanlage nach einer der Ausführungsformen 26 bis 32, dadurch gekennzeichnet, dass ein Winkel zwischen der Drehachse der Antriebswelle und der Vertikalrichtung zwischen 0° und 45° beträgt, vorzugsweise zwischen 0° und 15°.
Ausführungsform 34: Fluidverarbeitungsanlage nach einer der vorhergehenden Ausführungsformen, dadurch gekennzeichnet, dass die Gehäusekonstruktion einen Überlaufschutz aufweist, insbesondere zum Schutz des Drehlagers.
Ausführungsform 35: Fluidverarbeitungsanlage nach einer der vorhergehenden Ausführungsformen, dadurch gekennzeichnet, dass die Fördereinrichtung oder wenigstens eine der Fördereinrichtungen außerhalb des Prozessbehälters angeordnet ist, wobei ein Fluidaustritt des Prozessbehälters mit dem Fluideinlass fluidisch verbunden ist, und wobei ein Fluideintritt des Prozessbehälters mit dem Fluidauslass fluidisch verbunden ist.
Ausführungsform 36: Fluidverarbeitungsanlage nach einer der vorhergehenden Ausführungsformen, dadurch gekennzeichnet, dass die Fördereinrichtung oder wenigstens eine der Fördereinrichtungen wenigstens abschnittsweise in dem Prozessbehälter angeordnet ist.
Ausführungsform 37: Fluidverarbeitungsanlage nach einer der vorhergehenden Ausführungsformen, dadurch gekennzeichnet, dass die Fluidverarbeitungsanlage zusätzlich zu der Fördereinrichtung wenigstens einen Umpumpmischer aufweist, der in den Prozessbehälter hineinragt.
Ausführungsform 38: Fluidverarbeitungsanlage nach der vorhergehenden Ausführungsform, dadurch gekennzeichnet, dass der Umpumpmischer eine rotierende Schneideinheit aufweist.
Ausführungsform 39: Fluidverarbeitungsanlage nach einer der Ausführungsformen 37 und 38, dadurch gekennzeichnet, dass die Fluidverarbeitungsanlage wenigstens ein stationäres Strömungsbrechelement aufweist, das im Bereich des Umpumpmischers an einer Innenseite eines Wandungsabschnitts des Prozessbehälters angeordnet ist.
Ausführungsform 40: Fluidverarbeitungsanlage nach einer der vorhergehenden Ausführungsformen, dadurch gekennzeichnet, dass die Fluidverarbeitungsanlage eine Zuführeinrichtung zum Zuführen von polymerhaltigen Ausgangsmaterialien in den Prozessbehälter aufweist, wobei die Zuführeinrichtung eine Kompaktiereinheit mit zwei drehbar gelagerten Schnecken aufweist, die in Richtung eines Materialaustritts der Kompaktiereinheit konisch zulaufen.
Ausführungsform 41: Fluidverarbeitungsanlage nach der vorhergehenden Ausführungsform, dadurch gekennzeichnet, dass
   - die Zuführeinrichtung einen Extruder aufweist und der Materialaustritt der Kompaktiereinheit in den Extruder mündet, oder dass
   - der Materialaustritt der Kompaktiereinheit direkt in den Prozessbehälter mündet.
Ausführungsform 42: Verfahren zum Betreiben einer Fluidverarbeitungsanlage gemäß einer der Ausführungsformen 1 bis 41, das Verfahren umfassend:
   - Anordnen einer Prozessflüssigkeit in dem Prozessbehälter; und
   - Ansteuern der Fördereinrichtung, wobei die Fördereinrichtung derart angesteuert wird, dass die Prozessflüssigkeit umgewälzt und durch dissipative Verlustleistung der Fördereinrichtung auf eine Betriebstemperatur aufgeheizt wird, vorzugsweise auf eine Betriebstemperatur von wenigstens 200 °C, besonders bevorzugt auf eine Betriebstemperatur zwischen 250 °C und 450 °C.
Ausführungsform 43: Verfahren nach der vorhergehenden Ausführungsform, dadurch gekennzeichnet, dass eine Temperatur der aufgeheizten Prozessflüssigkeit ermittelt wird, und dass die Fördereinrichtung in Abhängigkeit von der ermittelten Temperatur derart angesteuert wird, dass die Prozessflüssigkeit bei der Betriebstemperatur gehalten wird.
Ausführungsform 44: Verfahren nach einer der Ausführungsformen 42 und 43, dadurch gekennzeichnet, dass die Prozessflüssigkeit ein Anfahröl aufweist, und dass der auf die Betriebstemperatur aufgeheizten Prozessflüssigkeit, insbesondere sukzessive, ein polymerhaltiges Ausgangsmaterial zugegeben wird.

## Patentansprüche

1. Fluidverarbeitungsanlage (10), insbesondere zur Gewinnung von Sekundärressourcen aus polymerhaltigen Ausgangsmaterialien, die Fluidverarbeitungsanlage (10) umfassend:
- einen ein- oder mehrteiligen Prozessbehälter (12), der einen fluidisch verbundenen Prozessraum (14) zur Aufnahme einer Prozessflüssigkeit (16) definiert; und
- wenigstens eine Fördereinrichtung (32) zum Umwälzen der Prozessflüssigkeit (16), die Fördereinrichtung (32) umfassend:
• eine Gehäusekonstruktion (40), die eine Fluidpassage (42) mit wenigstens einem Fluideinlass (44) und wenigstens einem Fluidauslass (46) definiert;
• eine Hauptförderkomponente (48), die dazu ausgebildet ist, die Prozessflüssigkeit (16) von dem Fluideinlass (44) zu dem Fluidauslass (46) durch die Fluidpassage (42) zu fördern, wobei die Hauptförderkomponente (48) wenigstens einen ersten Förderkörper (50) aufweist, der in der Fluidpassage (42) drehbar angeordnet ist; und
• eine Drosselförderkomponente (58) zur Erhöhung des hydraulischen Widerstands in der Fluidpassage (42), wobei die Drosselförderkomponente (58) wenigstens einen zweiten Förderkörper (60) aufweist, der zwischen dem ersten Förderkörper (50) und dem Fluidauslass (46) in der Fluidpassage (42) drehbar angeordnet ist, insbesondere wobei die Hauptförderkomponente (48) eine größere konstruktive Förderkapazität aufweist als die Drosselförderkomponente (58).

2. Fluidverarbeitungsanlage (10) nach Anspruch 1, **dadurch gekennzeichnet, dass** die Fördereinrichtung (32) eine Umgehungsleitung (74) mit einer Durchflussregelarmatur (76) aufweist, wobei die Umgehungsleitung (74) dazu ausgebildet ist, wenigstens einen Teil der Prozessflüssigkeit (16) an der Drosselförderkomponente (58) vorbeizuleiten.

3. Fluidverarbeitungsanlage (10) nach einem der vorhergehenden Ansprüche, **dadurch gekennzeichnet, dass** die Hauptförderkomponente (48) als erste Turbinenpumpe (88) ausgebildet ist und wenigstens ein erstes Laufrad (92) aufweist, und/oder dass die Drosselförderkomponente (58) als zweite Turbinenpumpe (94) ausgebildet ist und wenigstens ein zweites Laufrad (96) aufweist, insbesondere
- wobei die Druckseite der ersten Turbinenpumpe (88) durch zwei Strömungspfade mit der Saugseite der zweiten Turbinenpumpe (58) fluidisch verbunden ist.

4. Fluidverarbeitungsanlage (10) nach einem der vorhergehenden Ansprüche, **dadurch gekennzeichnet, dass** die Hauptförderkomponente (48) als erste Schraubenspindelpumpe (54) ausgebildet ist und wenigstens eine erste Schraubenspindel (56) aufweist, und/oder dass die Drosselförderkomponente (58) als zweite Schraubenspindelpumpe (62) ausgebildet ist und wenigstens eine zweite Schraubenspindel (64) aufweist, insbesondere
- wobei die erste Schraubenspindel (56) einen größeren Durchmesser aufweist als die zweite Schraubenspindel (64).

5. Fluidverarbeitungsanlage (10) nach einem der vorhergehenden Ansprüche, **dadurch gekennzeichnet, dass** die Hauptförderkomponente (48) als erste Propellerpumpe (148) ausgebildet ist und wenigstens einen ersten Propeller (152) aufweist, und/oder dass die Drosselförderkomponente (58) als zweite Propellerpumpe (150) ausgebildet ist und wenigstens einen zweiten Propeller (154) aufweist.

6. Fluidverarbeitungsanlage (10) nach einem der vorhergehenden Ansprüche, **dadurch gekennzeichnet, dass** die Fördereinrichtung (32) wenigstens eine Antriebswelle (68) aufweist, wobei wenigstens ein erster Förderkörper (50) und/oder wenigstens ein zweiter Förderkörper (60) auf der Antriebswelle (68) drehfest angeordnet sind/ist.

7. Fluidverarbeitungsanlage (10) nach dem vorhergehenden Anspruch, **dadurch gekennzeichnet, dass** die Antriebswelle (68) durch eine Durchgangsöffnung (162) einer Gehäusewandung (180) der Gehäusekonstruktion (40) hindurchragt, wobei die Gehäusekonstruktion (40) auf einer von der Fluidpassage (42) abgewandten Seite der Gehäusewandung (180) einen Dichtabschnitt (182) aufweist, wobei zwischen dem Dichtabschnitt (182) und der Antriebswelle (68) eine Fluiddichtung (184) angeordnet ist, und wobei der Dichtabschnitt (182) zwischen der Durchgangsöffnung (162) und der Fluiddichtung (184) einen Fluidraum (186) definiert, dessen Querschnittsfläche größer ist als die Querschnittsfläche der Durchgangsöffnung (162).

8. Fluidverarbeitungsanlage (10) nach dem vorhergehenden Anspruch, dass der Dichtabschnitt (182) einen Zuführdurchgang (188) für eine Spülflüssigkeit aufweist, wobei der Zuführdurchgang (188) zwischen der Fluiddichtung (184) und der Durchgangsöffnung (162) in den Fluidraum (186) mündet.

9. Fluidverarbeitungsanlage (10) nach einem der Ansprüche 7 und 8, **dadurch gekennzeichnet, dass** im Bereich der Durchgangsöffnung (162) eine weitere Fluiddichtung (200) angeordnet ist.

10. Fluidverarbeitungsanlage (10) nach einem der vorhergehenden Ansprüche, **dadurch gekennzeichnet, dass** die Fluidverarbeitungsanlage (10) zusätzlich zu der Fördereinrichtung (32) wenigstens einen Umpumpmischer (202) aufweist, der in den Prozessbehälter (12) hineinragt.

11. Fluidverarbeitungsanlage (10) nach dem vorhergehenden Anspruch, **dadurch gekennzeichnet, dass** der Umpumpmischer (202) eine rotierende Schneideinheit (218) aufweist.

12. Fluidverarbeitungsanlage (10) nach einem der Ansprüche 10 und 11, **dadurch gekennzeichnet, dass** die Fluidverarbeitungsanlage (10) wenigstens ein stationäres Strömungsbrechelement (216) aufweist, das im Bereich des Umpumpmischers (202) an einer Innenseite einer Wandung (206) des Prozessbehälters (12) angeordnet ist.

13. Fluidverarbeitungsanlage (10) nach einem der vorhergehenden Ansprüche, **dadurch gekennzeichnet, dass** die Fluidverarbeitungsanlage (10) eine Zuführeinrichtung (36) zum Zuführen von polymerhaltigen Ausgangsmaterialien in den Prozessbehälter (12) aufweist, wobei die Zuführeinrichtung (36) eine Kompaktiereinheit (220) mit zwei drehbar gelagerten Schnecken (226) aufweist, die in Richtung eines Materialaustritts (224) der Kompaktiereinheit (220) konisch zulaufen.

14. Fluidverarbeitungsanlage (10) nach dem vorhergehenden Anspruch, **dadurch gekennzeichnet, dass**
- die Zuführeinrichtung (36) einen Extruder (38) aufweist und der Materialaustritt (224) der Kompaktiereinheit (220) in den Extruder (38) mündet, oder dass
- der Materialaustritt (224) der Kompaktiereinheit (220) direkt in den Prozessbehälter (12) mündet.

15. Verfahren zum Betreiben einer Fluidverarbeitungsanlage (10) gemäß einem der Ansprüche 1 bis 14, das Verfahren umfassend:
- Anordnen einer Prozessflüssigkeit (16) in dem Prozessbehälter (12); und
- Ansteuern der Fördereinrichtung (32), wobei die Fördereinrichtung (32) derart angesteuert wird, dass die Prozessflüssigkeit (16) umgewälzt und durch dissipative Verlustleistung der Fördereinrichtung (32) auf eine Betriebstemperatur aufgeheizt wird, vorzugsweise auf eine Betriebstemperatur von wenigstens 200 °C, besonders bevorzugt auf eine Betriebstemperatur zwischen 250 °C und 450 °C.
